(19) Europäisches Patentamt
European Patent Office
Office européen des brevets

(11) **EP 4 447 586 A1**

(12) **EUROPEAN PATENT APPLICATION**
published in accordance with Art. 153(4) EPC

(43) Date of publication:
**16.10.2024 Bulletin 2024/42**

(21) Application number: **22918339.7**

(22) Date of filing: **08.12.2022**

(51) International Patent Classification (IPC):
**H04W 72/04** (2023.01)

(52) Cooperative Patent Classification (CPC):
**H04L 25/03; H04W 72/04; H04W 72/0446; H04W 72/0453**

(86) International application number:
**PCT/CN2022/137559**

(87) International publication number:
**WO 2023/130889 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.01.2022 CN 202210004697**

(71) Applicant: **Huawei Technologies Co., Ltd.**
**Shenzhen, Guangdong 518129 (CN)**

(72) Inventors:
• **WEI, Fan**
  **Shenzhen, Guangdong 518129 (CN)**
• **WANG, Lei**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **COMMUNICATION METHOD AND APPARATUS**

(57) This application relates to the communication field, and discloses a communication method and apparatus, to reduce multi-user interference, support different requirements on rates, delays, reliability, and the like in different service scenarios, and enable non-orthogonal multiple access based communication in different scenarios. The method includes: A first terminal device receives first frame information and second frame information from a network device, where the first frame information indicates to divide a resource block in a subframe into M*N time-frequency resource areas, and indicates that O time-frequency resource areas in the M*N time-frequency resource areas are used for signal transmission, and the second frame information indicates that R time-frequency resource units in each of the O time-frequency resource areas are used for signal transmission, where the resource block includes PM*QN time-frequency resource units, M, N, O, P, Q, and R are integers greater than or equal to 1, O is less than or equal to M*N, and R is less than or equal to P*Q. The first terminal device sends a signal.

FIG. 6

**Description**

**CROSS-REFERENCE TO RELATED APPLICATIONS**

This application claims priority to Chinese Patent Application No. 202210004697.4, filed with the China National Intellectual Property Administration on January 5, 2022 and entitled "COMMUNICATION METHOD AND APPARATUS", which is incorporated herein by reference in its entirety.

**TECHNICAL FIELD**

Embodiments of this application relate to the field of communication technologies, and in particular, to a communication method and apparatus.

**BACKGROUND**

In a wireless communication system, a problem of multiplexing resources such as time domain resources, frequency domain resources, or space domain resources by a plurality of users needs to be taken into special consideration. An existing system such as a long term evolution (long term evolution, LTE) system or a new radio (new radio, NR) system uses an orthogonal multiple access manner to allocate resources such as time domain resources, frequency domain resources, or space domain resources to users, so that each user can exclusively occupy a frequency domain resource, a time domain resource, or a space domain resource. With widespread application of applications such as an internet of things, a quantity of users accessing a wireless network increases exponentially. In a case of strained communication resources such as a spectrum, a non-orthogonal multiple access manner needs to be considered, in other words, a plurality of users share a same communication resource such as a same time domain resource, a same frequency domain resource, or a same space domain resource in a communication process.

In non-orthogonal multiple access, the users share the same communication resource. This may lead to a problem of multi-user interference (that is, multi-access interference). Therefore, how to handle the multi-access interference is a problem that needs to be taken into special consideration. In addition, with the development of diversified user services, how to meet different requirements on rates, delays, reliability, and the like in diversified service application scenarios is also a problem that needs to be taken into special consideration.

**SUMMARY**

Embodiments of this application provide a communication method and apparatus, to reduce multi-user interference, support different requirements on rates, delays, reliability, and the like in different service scenarios, and enable non-orthogonal multiple access based communication in different scenarios.

According to a first aspect, an embodiment of this application provides a communication method. The method includes: A first terminal device receives first frame information and second frame information from a network device, where the first frame information indicates to divide a resource block in a subframe into $M*N$ time-frequency resource areas, and indicates that O time-frequency resource areas in the $M*N$ time-frequency resource areas are used for signal transmission, and the second frame information indicates that R time-frequency resource units in each of the O time-frequency resource areas are used for signal transmission. The first terminal device sends a signal. The resource block includes $PM*QN$ time-frequency resource units. M, N, O, P, Q, and R are integers greater than or equal to 1. O is less than or equal to $M*N$. R is less than or equal to $P*Q$. Optionally, the first frame information includes a value of M or N, or values of P and Q.

A first sparseness degree of the time-frequency resource areas in the resource block is a ratio of O to $M*N$. A second sparseness degree of the time-frequency resource units in the time-frequency resource area is a ratio of R to $P*Q$. An overall sparseness degree of the time-frequency resource units in the subframe is a ratio of $O*R$ to $PM*QN$, that is, a product of the first sparseness degree and the second sparseness degree.

The communication method may be performed by the first terminal device, may be performed by a component (for example, a processor, a chip, or a chip system) of the first terminal device, or may be implemented by a logical module or software that can implement all or some functions of the first terminal device.

According to the foregoing method, the network device may determine the first frame information and the second frame information based on the first sparseness degree and the second sparseness degree that are required for communicating with the first terminal device or communicating with a terminal device group to which the first terminal device belongs, and flexibly adjust the overall sparseness degree of the time-frequency resource units in the subframe, to meet different requirements on rates, delays, reliability, and the like in different service scenarios, and enable non-orthogonal multiple access based communication in different scenarios. In addition, different terminal devices send a signal only on some time-frequency resource units in the subframe, so that a quantity of terminal devices that send a signal on each time-frequency resource unit can be reduced, and interference between the terminal devices (that is, users) can be reduced.

In a possible design, before that the first terminal device sends a signal to the network device, the method further includes: The first terminal device receives third frame information from the network device, where the third frame information indicates a first resource mapping pattern of each of the O time-frequency resource areas, the first resource mapping pattern is a resource mapping pattern in a resource mapping pattern set, and the resource mapping pattern set corresponds to values of P, Q, and R.

In the foregoing design, the network device may further flexibly indicate the resource mapping pattern used by the first terminal device to send the signal in the O time-frequency resource areas, to help enable non-orthogonal multiple access based communication in different scenarios.

In a possible design, the resource mapping pattern used by the first terminal device in the O time-frequency resource areas and a resource mapping pattern used by a second terminal device in the O time-frequency resource areas are orthogonal to each other, the first terminal device belongs to a first terminal device group, at least two terminal devices included in the first terminal device group send a signal in the O time-frequency resource areas, and the second terminal device is any terminal device other than the first terminal device in the first terminal device group.

In the foregoing design, terminal devices that are in a terminal device group and that send a signal in same O time-frequency resource areas have mutually orthogonal resource mapping patterns in the O time-frequency resource areas, to help reduce interference between the terminal devices (that is, users) and improve communication performance.

In a possible design, before that the first terminal device sends a signal, the method further includes: The first terminal device determines a first sequence based on a ratio of a time-frequency resource occupied by a data signal to a time-frequency resource occupied by a pilot signal, where the first sequence indicates that each of the M*N time-frequency resource areas is used to transmit the pilot signal or the data signal. Optionally, the method further includes: The first terminal device receives a fourth frame message from the network device, where the fourth frame message indicates the ratio of the time-frequency resource occupied by the data signal to the time-frequency resource occupied by the pilot signal.

According to the foregoing method, the network device may further flexibly configure the ratio of the time-frequency resource unit occupied by the pilot signal sent by the terminal device to the time-frequency resource unit occupied by the data signal sent by the terminal device, to help meet different requirements on rates, delays, reliability, and the like in different service scenarios, and enable non-orthogonal multiple access based communication in different scenarios.

In a possible design, that the first terminal device determines a first sequence based on a ratio of a time-frequency resource occupied by a data signal to a time-frequency resource occupied by a pilot signal includes: The first terminal device determines values of sequence mapping parameters m, n, and k based on the ratio of the time-frequency resource occupied by the data signal to the time-frequency resource occupied by the pilot signal, where the values of m, n, and k are integers. The first terminal device performs layer-by-layer mapping based on a first-layer base sequence and according to a rule of mapping each element d to m elements p and n elements d, and mapping each element p to k elements d, until a quantity of elements in an obtained $L^{th}$-layer sequence is greater than or equal to M*N, where the base sequence includes the element p and/or the element d, the element p indicates that the time-frequency resource area is used to transmit the pilot signal, the element d indicates that the time-frequency resource area is used to transmit the data signal, and L is an integer greater than or equal to 1. The first terminal device selects M*N consecutive elements in the $L^{th}$-layer sequence as the first sequence.

In the foregoing design, the data signal and the pilot signal may be randomly distributed in the time-frequency resource, so that a channel estimation effect can be improved, and signal receiving performance is improved.

In a possible design, the base sequence is determined based on a cell identifier of the network device, in other words, is determined based on a cell identifier of a cell in which the first terminal device is located.

In the foregoing design, the base sequence is determined based on the cell identifier, so that all terminal devices in a same cell can divide time-frequency resource areas occupied by a pilot signal and a data signal in a same manner, and all the terminal devices in the cell send the pilot signal or send the data signal in a same time-frequency resource area. This can avoid mutual interference between the pilot signal and the data signal sent by different terminal devices in the same cell, and improve communication performance.

In a possible design, the O time-frequency resource areas are evenly distributed in the M*N time-frequency resource areas based on time domain locations.

In the foregoing design, the O time-frequency resource areas are evenly distributed in the M*N time-frequency resource areas based on the time domain locations, so that quantities of time-frequency resource areas used for signal transmission on symbols are equal. This can avoid a case in which the first terminal device generates a large instantaneous peak power when sending the signal, and can reduce a peak to average power ratio (peak to average power ratio, PAPR) of sending the signal by the first terminal device.

According to a second aspect, an embodiment of this application provides a communication method. The method includes: A network device determines first frame information and second frame information, where the first frame information indicates to divide a resource block in a subframe into M*N time-frequency resource areas, and indicates that O time-frequency resource areas in the M*N time-frequency resource areas are used for signal transmission, and the second frame information indicates that R time-frequency resource units in each of the O time-frequency resource areas are used for signal transmission. The resource block includes PM*QN time-frequency resource units. M, N, O, P, Q, and R are integers greater than or equal to 1. O is less than or equal to M*N. R is less than or equal to P*Q. The network device sends the first frame information and the second frame information. Optionally, the first frame information includes a value of M or N, or values of P and Q.

The communication method may be performed by the network device, may be performed by a component (for example, a processor, a chip, or a chip system) of the network device, or may be implemented by a logical module or software that can implement all or some functions of the network device.

In a possible design, the method further includes: The network device receives a signal from a first terminal device.

In a possible design, the method further includes: The network device sends third frame information to the first terminal device, where the third frame information indicates a first resource mapping pattern of each of the O time-frequency resource areas, the first resource mapping pattern is a resource mapping pattern in a resource mapping pattern set, and the resource mapping pattern set corresponds to values of P, Q, and R.

In a possible design, the resource mapping pattern used by the first terminal device in the O time-frequency resource areas and a resource mapping pattern used by a second terminal device in the O time-frequency resource areas are orthogonal to each other, the first terminal device belongs to a first terminal device group, at least two terminal devices included in the first terminal device group send a signal in the O time-frequency resource areas, and the second terminal device is any terminal device other than the first terminal device in the first terminal device group.

In a possible design, the method further includes: The network device determines a first sequence based on a ratio of a time-frequency resource occupied by a data signal to a time-frequency resource occupied by a pilot signal, where the first sequence indicates that each of the M*N time-frequency resource areas is used to transmit the pilot signal or the data signal. Optionally, the method further includes: The network device sends fourth frame information to the first terminal device, where the fourth frame message indicates the ratio of the time-frequency resource occupied by the data signal to the time-frequency resource occupied by the pilot signal.

In a possible design, that the network device determines a first sequence based on a ratio of a time-frequency resource occupied by a data signal to a time-frequency resource occupied by a pilot signal includes: The network device determines values of sequence mapping parameters m, n, and k based on the ratio of the time-frequency resource occupied by the data signal to the time-frequency resource occupied by the pilot signal, where values of m, n, and k are integers. The network device performs layer-by-layer mapping based on a first-layer base sequence and according to a rule of mapping each element d to m elements p and n elements d, and mapping each element p to k elements d, until a quantity of elements in an obtained $L^{th}$-layer sequence is greater than or equal to M*N, where the base sequence includes the element p and/or the element d, the element p indicates that the time-frequency resource area is used to transmit the pilot signal, the element d indicates that the time-frequency resource area is used to transmit the data signal, and L is an integer greater than or equal to 1. The network device selects M*N consecutive elements in the $L^{th}$-layer sequence as the first sequence.

In a possible design, the base sequence is determined based on a cell identifier of the network device. The cell identifier is an identifier of a cell in which the first terminal device is located.

In a possible design, the O time-frequency resource areas are evenly distributed in the M*N time-frequency resource areas based on time domain locations.

According to a third aspect, an embodiment of this application provides a communication apparatus. The communication apparatus may include an interface unit and a processing unit. The interface unit is configured to receive first frame information and second frame information from a network device, where the first frame information indicates to divide a resource block in a subframe into M*N time-frequency resource areas, and indicates that O time-frequency resource areas in the M*N time-frequency resource areas are used for signal transmission, and the second frame information indicates that R time-frequency resource units in each of the O time-frequency resource areas are used for signal transmission. The resource block includes PM*QN time-frequency resource units. M, N, O, P, Q, and R are integers greater than or equal to 1. O is less than or equal to M*N. R is less than or equal to PQ. The processing unit is configured to determine a signal. The interface unit is further configured to send the signal. Optionally, the first frame information includes a value of M or N, or values of P and Q.

In a possible design, the interface unit is further configured to: before sending the signal, receive third frame information from the network device, where the third frame information indicates a first resource mapping pattern of each of the O time-frequency resource areas, the first resource mapping pattern is a resource mapping pattern in a resource mapping pattern set, and the resource mapping pattern set corresponds to values of P, Q, and R.

In a possible design, the processing unit is further configured to: before the interface unit sends the signal, determine a first sequence based on a ratio of a time-frequency resource occupied by a data signal to a time-frequency resource occupied by a pilot signal, where the first sequence indicates that each of the M*N time-frequency resource areas is used to transmit the pilot signal or the data signal.

In a possible design, when determining the first sequence based on the ratio of the time-frequency resource occupied by the data signal to the time-frequency resource occupied by the pilot signal, the processing unit is specifically configured to: determine values of sequence mapping parameters m, n, and k based on the ratio of the time-frequency resource occupied by the data signal to the time-frequency resource occupied by the pilot signal, where the values of m, n, and k are integers; perform layer-by-layer mapping based on a first-layer base sequence and according to a rule of mapping each element d to m elements p and n elements d, and mapping each element p to k elements d, until a quantity of elements in an obtained $L^{th}$-layer sequence is greater than or equal to M*N, where the base sequence includes the element p and/or the element d, the element p indicates that the time-frequency resource area is used to transmit the pilot signal, the element d indicates that the time-frequency resource area is used to transmit the data signal, and L is an integer greater than or equal to 1; and select M*N consecutive elements in the $L^{th}$-layer sequence as the first sequence.

In a possible design, the interface unit is further configured to receive a fourth frame message from the network device, where the fourth frame message indicates the ratio of the time-frequency resource occupied by the data signal to the time-frequency resource occupied by the pilot signal.

In a possible design, the resource mapping pattern used by the communication apparatus in the O time-frequency resource areas and a resource mapping pattern used by a second terminal device in the O time-frequency resource areas are orthogonal to each other, the communication apparatus belongs to a first terminal device group, at least two terminal devices included in the first terminal device group send a signal in the O time-frequency resource areas, and the second terminal device is any terminal device other than the communication apparatus in the first terminal device group.

In a possible design, the base sequence is determined based on a cell identifier of the network device, in other words, is determined based on a cell identifier of a cell in which the communication apparatus is located.

In a possible design, the O time-frequency resource areas are evenly distributed in the M*N time-frequency resource areas based on time domain locations.

According to a fourth aspect, an embodiment of this application provides a communication apparatus. The communication apparatus may include an interface unit and a processing unit. The processing unit is configured to determine first frame information and second frame information, where the first frame information indicates to divide a resource block in a subframe into M*N time-frequency resource areas, and indicates that O time-frequency resource areas in the M*N time-frequency resource areas are used for signal transmission, and the second frame information indicates that R time-frequency resource units in each of the O time-frequency resource areas are used for signal transmission. The resource block includes PM*QN time-frequency resource units. M, N, O, P, Q, and R are integers greater than or equal to 1. O is less than or equal to M*N. R is less than or equal to P*Q. The interface unit is configured to send the first frame information and the second frame information to a first terminal device. Optionally, the first frame information includes a value of M or N, or values of P and Q.

In a possible design, the interface unit is further configured to receive a signal from the first terminal device.

In a possible design, the interface unit is further configured to send third frame information to the first terminal device, where the third frame information indicates a first resource mapping pattern of each of the O time-frequency resource areas, the first resource mapping pattern is a resource mapping pattern in a resource mapping pattern set, and the resource mapping pattern set corresponds to values of P, Q, and R.

In a possible design, the processing unit is further configured to determine a first sequence based on a ratio of a time-frequency resource occupied by a data signal to a time-frequency resource occupied by a pilot signal, where the first sequence indicates that each of the M*N time-frequency resource areas is used to transmit the pilot signal or the data signal.

In a possible design, when determining the first sequence based on the ratio of the time-frequency resource occupied by the data signal to the time-frequency resource occupied by the pilot signal, the processing unit is specifically configured to: determine values of sequence mapping parameters m, n, and k based on the ratio of the time-frequency resource occupied by the data signal to the time-frequency resource occupied by the pilot signal, where the values of m, n, and k are integers; perform layer-by-layer mapping based on a first-layer base sequence and according to a rule of mapping each element d to m elements p and n elements d, and mapping each element p to k elements d, until a quantity of elements in an obtained $L^{th}$-layer sequence is greater than or equal to M*N, where the base sequence includes the element p and/or the element d, the element p indicates that the time-frequency resource area is used to transmit the pilot signal, the element d indicates that the time-frequency resource area is used to transmit the data signal, and L is an integer greater than or equal to 1; and select M*N consecutive elements in the $L^{th}$-layer sequence as the first sequence.

In a possible design, the interface unit is further configured to send fourth frame information, where the fourth frame message indicates the ratio of the time-frequency resource occupied by the data signal to the time-frequency resource occupied by the pilot signal.

In a possible design, the resource mapping pattern used by the first terminal device in the O time-frequency resource areas and a resource mapping pattern used by a second terminal device in the O time-frequency resource areas are orthogonal to each other, the first terminal device belongs to a first terminal device group, at least two terminal devices included in the first terminal device group send a signal in the O time-frequency resource areas, and the second terminal device is any terminal device other than the first terminal device in the first terminal device group.

In a possible design, the base sequence is determined based on a cell identifier of a network device. The cell identifier is an identifier of a cell in which the first terminal device is located.

In a possible design, the O time-frequency resource areas are evenly distributed in the M*N time-frequency resource areas based on time domain locations.

According to a fifth aspect, an embodiment of this application provides a communication apparatus. The communication apparatus includes an interface circuit and a processor. The processor and the interface circuit are coupled to each other. The processor is configured to implement the method according to any one of the first aspect or the possible designs of the first aspect by using a logic circuit or by executing code instructions. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a transceiver, or an input/output interface.

Optionally, the communication apparatus may further include a memory, configured to: store instructions to be executed by the processor, store input data required by the processor to run instructions, or store data generated after the processor runs instructions. The memory may be a physically independent unit, or may be coupled to the processor, or the processor includes the memory.

According to a sixth aspect, an embodiment of this application provides a communication apparatus. The communication apparatus includes an interface circuit and a processor. The processor and the interface circuit are coupled to each other. The processor is configured to implement the method according to any one of the second aspect or the possible designs of the second aspect by using a logic circuit or by executing code instructions. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a transceiver, or an input/output interface.

Optionally, the communication apparatus may further include a memory, configured to: store instructions to be executed by the processor, store input data required by the processor to run instructions, or store data generated after the processor runs instructions. The memory may be a physically independent unit, or may be coupled to the processor, or the processor includes the memory.

According to a seventh aspect, an embodiment of this application provides a communication system. The communication system includes a first terminal device and a network device. The first terminal device may perform the method according to any one of the first aspect or the possible designs of the first aspect. The network device may perform the method according to any one of the second aspect or the possible designs of the second aspect.

According to an eighth aspect, an embodiment of this application provides a computer-readable storage medium. The storage medium stores a computer program or instructions. When the computer program or the instructions are executed, the method according to any one of the first aspect or the possible designs of the first aspect or the method according to any one of the second aspect or the possible designs of the second aspect may be implemented.

According to a ninth aspect, an embodiment of this application further provides a computer program product, including a computer program or instructions. When the computer program or the instructions are executed, the method according to any one of the first aspect or the possible designs of the first aspect or the method according to any one of the second aspect or the possible designs of the second aspect may be implemented.

According to a tenth aspect, an embodiment of this application further provides a chip. The chip is coupled to a memory, and is configured to read and execute a program or instructions stored in the memory, to implement the method according to any one of the first aspect or the possible designs of the first aspect, or implement the method according to any one of the second aspect or the possible designs of the second aspect.

For technical effects that can be achieved in the second aspect to the tenth aspect, refer to technical effects that can be achieved in the first aspect. Details are not described herein again.

**BRIEF DESCRIPTION OF DRAWINGS**

FIG. 1 is a first diagram of an architecture of a communication system according to an embodiment of this application;

FIG. 2 is a second diagram of an architecture of a communication system according to an embodiment of this application;

FIG. 3 is a diagram of a structure of a radio frame according to an embodiment of this application;

FIG. 4 is a diagram of sparse code multiple access according to an embodiment of this application;

FIG. 5 is a diagram of a DMRS solution according to an embodiment of this application;

FIG. 6 is a diagram of a communication method according to an embodiment of this application;

FIG. 7 is a diagram of a first-level frame structure according to an embodiment of this application;

FIG. 8 is a diagram of a second-level frame structure according to an embodiment of this application;

FIG. 9 is a diagram of a resource mapping pattern according to an embodiment of this application;

FIG. 10 is a diagram of a solution of allocating a base matrix and a resource mapping pattern indication sequence according to an embodiment of this application;

FIG. 11 is a diagram of a result of transmitting a pilot signal or a data signal in M*N time-frequency resource areas according to an embodiment of this application;

FIG. 12 is a diagram of a signal sending mechanism of a first terminal device according to an embodiment of this application;

FIG. 13 is a second diagram of simulation performance of a block error rate of channel estimation according to an embodiment of this application;

FIG. 14 is a second diagram of simulation performance of a block error rate of channel estimation according to an embodiment of this application;

FIG. 15 is a diagram of a communication apparatus according to an embodiment of this application; and

FIG. 16 is a second diagram of a communication apparatus according to an embodiment of this application.

## DESCRIPTION OF EMBODIMENTS

The technical solutions of embodiments of this application may be applied to various communication systems, for example, a long term evolution (long term evolution, LTE) system, a worldwide interoperability for microwave access (worldwide interoperability for microwave access, WiMAX) communication system, and a 5th generation (5th generation, 5G) mobile communication system, such as a new radio (new radio, NR) system. The technical solutions provided in this application may be further applied to a future communication system, for example, a 6th generation mobile communication system. The communication system may alternatively be a Bluetooth (Bluetooth) communication system, a wireless local area network (wireless local area network, WLAN)/wireless communication technology (Wi-Fi) communication system, a narrowband internet of things (narrowband internet of things, NB-IoT) communication system, or the like.

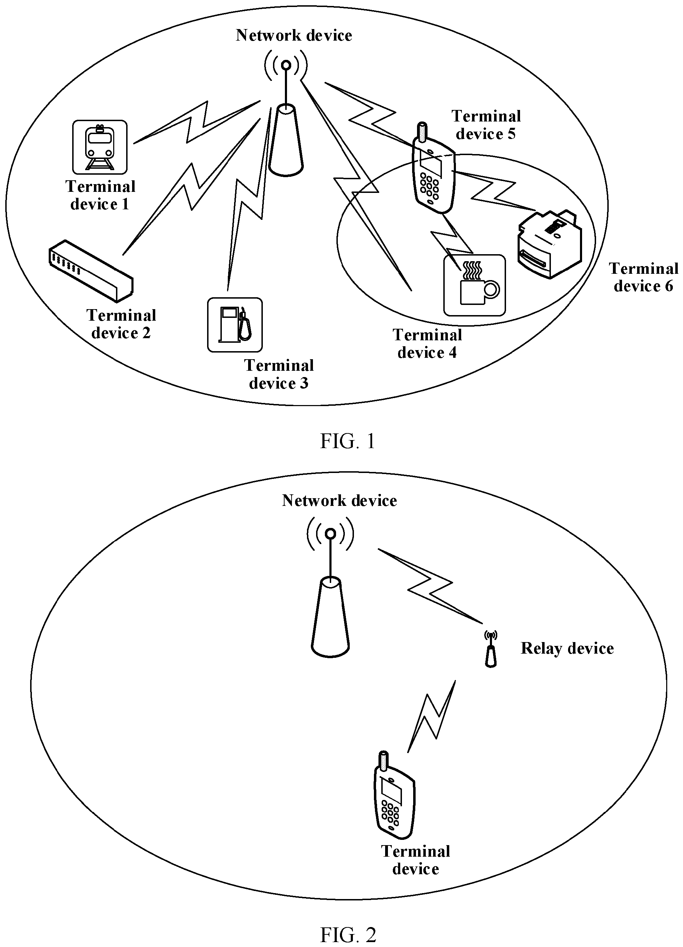

FIG. 1 is a diagram of an architecture of a communication system to which an embodiment of this application is applied. As shown in FIG. 1, the communication system includes a network device and terminal devices. An example in which there is one network device and there are six terminal devices is used. In the communication system shown in FIG. 1, the network device may send a signal (or information) to a terminal device 1 to a terminal device 6, or may receive a signal (or information) from the terminal devices 1 to 6. The signal (or the information) herein may be a physical signal such as a pilot signal; physical layer control information such as downlink control information (downlink control information, DCI) and uplink control information (uplink control information, UCI); control plane (control plane, CP) data such as a radio resource control (radio resource control, RRC) message; user plane (user plane, UP) data; or other information related to a specific scenario or application.

In addition, the terminal devices may also form a communication system. Specifically, for example, in a smart home scenario, the terminal device 4 to the terminal device 6 may form a communication system. The terminal device 5 may send control instructions to the terminal device 4 and the terminal device 6. After receiving the control instructions, the terminal device 4 and the terminal device 6 perform corresponding operations, or feed back information such as statuses to the terminal device 5. For another example, in an internet of vehicles scenario, the terminal device 4 to the terminal device 6 may form a communication system. A vehicle-mounted terminal device (for example, the terminal device 4) may send information to another vehicle-mounted terminal device (for example, the terminal device 5), or may receive information from another vehicle-mounted terminal device.

A communication system to which an embodiment of this application is applied may alternatively be shown in FIG. 2. In the system, a signal is forwarded between a network device and a terminal device via a relay device (also referred to as a relay node). The relay device may alternatively specifically be a network device or a terminal device. This is not limited in this application. It should be understood that for a relay system shown in FIG. 2, an example of a single-hop (single-hop) relay system is used, in other words, there is only one relay device between the network device and the terminal device. In a specific implementation, the network device and the terminal device may alternatively form a multi-hop (multi-hop) relay system. In other words, there may be a plurality of relay devices between the network device and the terminal device.

The terminal device may also be referred to as a terminal, user equipment (user equipment, UE), a mobile station, a mobile terminal, or the like. The terminal device may be widely used in various scenarios such as device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, self-driving, telemedicine, a smart grid, smart furniture, a smart office, a smart wearable device, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, a vehicle-mounted terminal, an IoT terminal, a wearable device, or the like. A specific technology and a specific device form that are used by the terminal device are not limited in embodiments of this application.

The network device may also be referred to as an access network (access network, AN) device or a radio access network (radio access network, RAN) device, and may be a base station (base station), an evolved base station (evolved NodeB, eNodeB), a transmission and reception point (transmission and reception point, TRP), an integrated access and backhaul (integrated access and backhaul, IAB) node, a next generation base station (next generation NodeB, gNB) in a 5th generation (5th generation, 5G) mobile communication system, a base station in a 6th generation (6th generation, 6G) mobile communication system, a base station in another future mobile communication system, an access node in a Wi-Fi system, a home base station (for example, a home evolved NodeB, or a home NodeB, HNB), an access point (access point, AP) in a wireless fidelity (wireless fidelity, Wi-Fi) system, a wireless relay node, a wireless backhaul node, or the like, or may be a module or a unit that completes some functions of a base station, for example, a central unit (central unit, CU), or a distributed unit (distributed unit, DU). The CU herein completes functions of a radio resource control protocol layer and a packet data convergence protocol (packet data convergence protocol, PDCP) layer of the base station, and may further implement a function of a service data adaptation protocol (service data adaptation protocol, SDAP) layer. The DU completes functions of a radio link control layer and a medium access control (medium access control, MAC) layer of the base station, and may further complete some or all of functions of a physical layer. For specific descriptions of the foregoing protocol layers, refer to 3rd generation partnership project (3rd generation partnership project, 3GPP) related technical specifications. The network device may alternatively be a non-terrestrial (non-terrestrial) base station, for example, a low earth orbit (low earth orbit, LEO)/very low earth orbit (very low earth orbit, VLEO) satellite or a high altitude platform station (high altitude platform station, HAPS), or may be a terminal that is responsible for a function of the network device in V2X, D2D, and machine-to-machine (machine-to-machine, M2M) communication.

Communication may be performed between the network device and the terminal device, between network devices, or between terminal devices by using a licensed spectrum, an unlicensed spectrum, or both the licensed spectrum and the unlicensed spectrum; and may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as the smart grid, the industrial control, the intelligent transportation, and the smart city. A function of the terminal device may be performed by a module (for example, a chip or a modem) in the terminal device, or may be performed by an apparatus including the function of the terminal device.

In this application, the network device sends a downlink signal to the terminal device, where the downlink signal is carried on a downlink channel; and the terminal device sends an uplink signal to the network device, where the uplink signal is carried on an uplink channel. A time domain symbol involved may be an orthogonal frequency division multiplexing (orthogonal frequency division multiplexing, OFDM) symbol, may be a discrete Fourier transformation-spread-OFDM (discrete Fourier transformation-spread-OFDM, DFT-s-OFDM) symbol, or may be a waveform signal of another type. Unless otherwise specified, a symbol in embodiments of this application is a time domain symbol.

For ease of understanding by a person skilled in the art, the following explains and describes some terms in embodiments of this application.

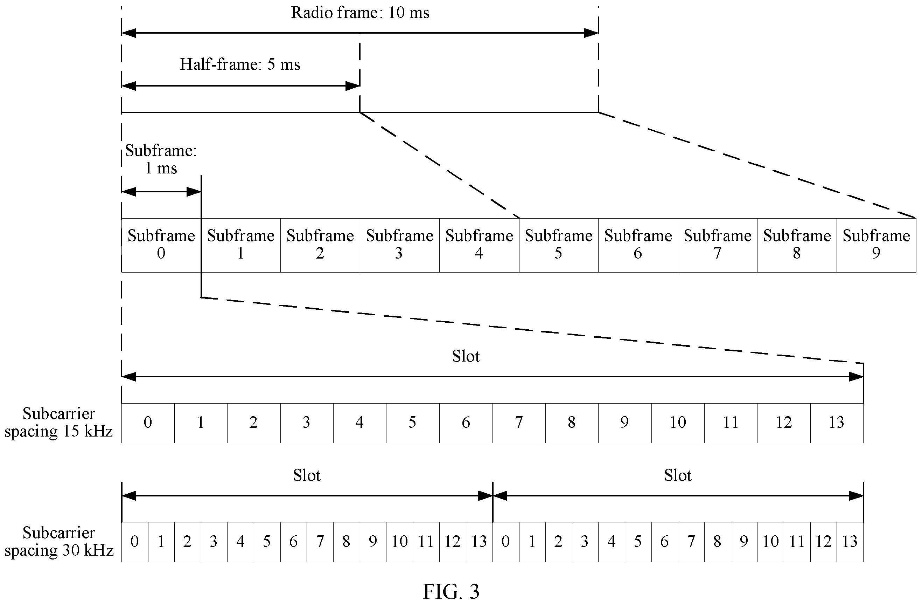

(1) Radio frame: In an NR system, the radio frame includes a time domain resource and a frequency domain resource. In a radio frame structure shown in FIG. 3, a length of the radio frame in time domain is defined as 10 milliseconds (ms). One radio frame includes 10 subframes. One half-frame includes five subframes. A length of each subframe is 1 ms. One subframe may be further divided into several slots. A specific quantity of slots is determined based on a subcarrier spacing. A larger subcarrier spacing indicates a smaller length of one slot. For example, when the subcarrier spacing is 15 kilohertz (kHz), one subframe includes one slot, and a length of each slot is 1 ms. When the subcarrier spacing is 30 kHz, one subframe includes two slots, and a length of each slot is 0.5 ms. Regardless of a value of the subcarrier spacing, one slot includes 14 symbols (a symbol 0 to a symbol 13).

For the frequency domain resource, regardless of the value of the subcarrier spacing, 12 consecutive subcarriers may be defined as one physical resource block (physical resource block, PRB), where each subcarrier may be defined as one resource element (resource element, RE). A larger subcarrier spacing indicates a larger actual bandwidth corresponding to one PRB. The PRB is a basic unit for resource allocation in frequency domain. Specifically, one RB occupies one subcarrier in frequency domain, and occupies one symbol in time domain. One PRB occupies 12 consecutive subcarriers in frequency domain, and occupies one slot (that is, 14 symbols) in time domain.

(2) Sparseness degree: In embodiments of this application, the sparseness degree is usually a ratio of a time-frequency resource used for signal transmission to a total time-frequency resource. For example, a sparseness degree of time-frequency resource areas in a resource block may be a ratio of a quantity of time-frequency resource areas used for signal transmission in the resource block to a total quantity of time-frequency resource areas in the resource block. A sparseness degree of time-frequency resource units in the time-frequency resource area may be a ratio of a quantity of time-frequency resource units used for signal transmission in the time-frequency resource area to a total quantity of time-frequency resource units in the time-frequency resource area.

(3) Sparse code multiple access (sparse code multiple access, SCMA): The SCMA is a non-orthogonal multiple access technology in code domain. In the SCMA, resource mapping of each user in a subframe is indicated by using a sparse signature sequence.

In an example, all six possible sparse signature sequences with a length N=4 and a sparseness degree $\rho$=1/2 may be expressed as:

$$S = \left\{ \begin{matrix} 1 \\ 1 \\ 0 \\ 0 \end{matrix} \quad \begin{matrix} 1 \\ 0 \\ 1 \\ 0 \end{matrix} \quad \begin{matrix} 1 \\ 0 \\ 0 \\ 1 \end{matrix} \quad \begin{matrix} 0 \\ 1 \\ 1 \\ 0 \end{matrix} \quad \begin{matrix} 0 \\ 1 \\ 0 \\ 1 \end{matrix} \quad \begin{matrix} 0 \\ 0 \\ 1 \\ 1 \end{matrix} \right\}.$$
$$\underset{Signature}{\underset{sequence\ 1}{}} \quad \underset{Signature}{\underset{sequence\ 2}{}} \quad \underset{Signature}{\underset{sequence\ 3}{}} \quad \underset{Signature}{\underset{sequence\ 4}{}} \quad \underset{Signature}{\underset{sequence\ 5}{}} \quad \underset{Signature}{\underset{sequence\ 6}{}}$$

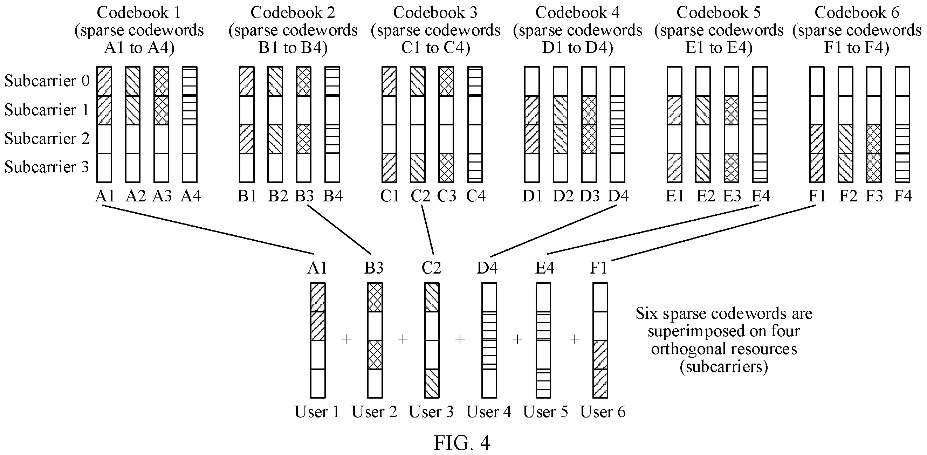

If a resource includes N=4 subcarriers (a subcarrier 0 to a subcarrier 3), when a user configures a sparse signature sequence 1, it indicates that the user selects only the subcarrier 0 and the subcarrier 1 from the four subcarriers to send a signal. Similarly, when the user configures a sparse signature sequence 3, it indicates that the user selects the subcarrier 0 and the subcarrier 3 to send a signal. The sparse signature sequence in SCMA can reduce a quantity of interfering users on a unit resource (for example, the subcarrier). In an example, as shown in FIG. 4, a communication system includes six access users, and the users are allocated with different sparse signature sequences respectively, where a sparse signature sequence 1 is allocated to a user 1, a sparse signature sequence 2 is allocated to a user 2, a sparse signature sequence 3 is allocated to a user 3, a sparse signature sequence 4 is allocated to a user 4, a sparse signature sequence 5 is allocated to a user 5, and a sparse signature sequence 6 is allocated to a user 6. Each sparse signature sequence corresponds to four different sparse codewords (or high-dimensional constellation points). The sparse signature sequences 1 to 6 respectively correspond to codebooks 1 to 6 in FIG. 4. The user may select a corresponding sparse codeword based on a mapping relationship between an information bit and the sparse codeword. Because of sparseness of the sparse signature sequence, a quantity of users whose data is superimposed on a unit subcarrier may be reduced from 6 to 3, to reduce multi-user interference.

The foregoing describes concepts of some nouns in embodiments of this application. The following describes technical features of embodiments of this application.

In SCMA, although a sparse signature sequence is introduced to reduce multi-user interference, it is difficult to support non-orthogonal multiple access based communication in different scenarios when there are different requirements on rates, delays, reliability, and the like in diversified service application scenarios. Therefore, this application provides a communication solution, to support flexible configuration of a plurality of parameters such as a frame structure sparseness degree and resource mapping locations of a pilot signal and a data signal, meet different requirements on rates, delays, reliability, and the like in diversified service application scenarios, and enable non-orthogonal multiple access based data communication in different scenarios.

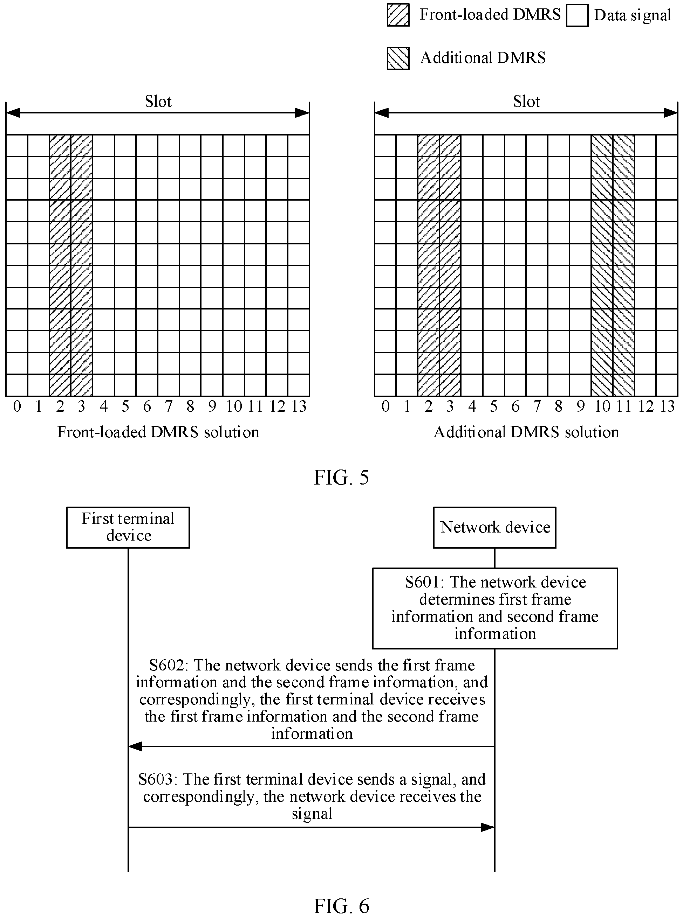

In addition, there are currently the following two solutions for configuration of a pilot signal (where a demodulation reference signal (demodulation reference signal, DMRS) is used as an example) in one slot. As shown in FIG. 5, one slot (slot) includes 14 symbols (a symbol 0 to a symbol 13). In a front-loaded DMRS solution, the DMRS occupies the symbol 2 and the symbol 3 in the slot, and the DMRS is set in front of a data signal, to help a receiving end obtain a lower processing delay. This is applicable to low-delay demodulation. In an additional DMRS solution, the DMRS occupies not only the symbol 2 and the symbol 3 in the slot but also the symbol 10 and the symbol 11 in the slot. The receiving end may perform data signal demodulation by using the DMRS in the symbol 2 and the symbol 3 and in the symbol 10 and the symbol 11, so that more accurate demodulation can be supported. It should be understood that, in embodiments of this application, the pilot signal includes but is not limited to a preamble (preamble), the DMRS, a sounding reference signal (sounding reference signal, SRS), a reference signal having a sensing function, and the like.

Considering that during existing frame structure configuration, the pilot signal is centralized on several specific symbols, this is not conducive to channel estimation when a channel rapidly changes on each symbol in a high-speed moving scenario. In embodiments of this application, locations of the pilot signal and the data signal on the time-frequency resource may be further randomized, to achieve a technical effect of randomly distributing the pilot signal and the data signal on the symbols, and to support more accurate channel estimation when the channel rapidly changes on each symbol in the high-speed moving scenario.

In addition, ordinal numbers such as "first" and "second" in embodiments of this application are used to distinguish between a plurality of objects, but are not intended to limit sizes, content, an order, a time sequence, priorities, importance degrees, or the like of the plurality of objects. For example, a first threshold and a second threshold may be a same threshold, or may be different thresholds. In addition, this type of name does not indicate that values, corresponding parameters, priorities, importance degrees, or the like of the two thresholds are different.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c. Herein, a, b, and c may be singular or plural.

The following describes in detail embodiments of this application with reference to the accompanying drawings.

FIG. 6 is a diagram of a communication method according to an embodiment of this application. In FIG. 6, an example in which a network device and a first terminal device are used as execution bodies is used to illustrate the method. Execution bodies of the method are not limited in this application. For example, the network device in FIG. 6 may alternatively be a chip, a chip system, or a processor that supports the network device in implementing the method, or may be a logical module or software that can implement all or some functions of the network device. The first terminal device in FIG. 6 may alternatively be a chip, a chip system, or a processor that supports the first terminal device in implementing the method, or may be a logical module or software that can implement all or some functions of the first terminal device. The method includes the following steps.

S601: The network device determines first frame information and second frame information, where the first frame information indicates to divide a resource block in a subframe into M*N time-frequency resource areas, and indicates that O time-frequency resource areas in the M*N time-frequency resource areas are used for signal transmission, and the second frame information indicates that R time-frequency resource units in each of the O time-frequency resource areas are used for signal transmission.

The resource block includes PM*QN time-frequency resource units. M, N, O, P, Q, and R are integers greater than or equal to 1. O is less than or equal to M*N. R is less than or equal to P*Q.

In this embodiment of this application, the resource block may occupy one or more slots in time domain, and occupy a bandwidth of one or more REs, a bandwidth of one or more sub-bands, or a bandwidth of one frequency band in frequency domain. A resource area may be a time-frequency resource unit set including one or more time-frequency resource units. One time-frequency resource unit may be one RE, in other words, one time-frequency resource unit is one symbol in time domain and one subcarrier in frequency domain. For ease of description, in this embodiment of this application, an example in which the resource block is one RB, that is, one slot (that is, 14 symbols) in time domain, and 12 consecutive subcarriers in frequency domain is used for subsequent description.

Specifically, the network device may flexibly configure an overall sparseness degree of a frame structure based on an indication of a two-level frame structure of the time-frequency resource area used for signal transmission in the resource block in the subframe and the time-frequency resource unit used for signal transmission in the time-frequency resource area.

In an example, the network device may use the first frame information to indicate to divide the resource block in the subframe into the M*N time-frequency resource areas, and indicate that the O time-frequency resource areas in the M*N time-frequency resource areas are used for signal transmission, to indicate or configure a first-level frame structure of the time-frequency resource area used for signal transmission in the resource block in the subframe, where a first sparseness degree $\rho_1$ of the time-frequency resource areas in the resource block in the subframe is equal to a ratio of O to M*N. The network device may further use the second frame information to indicate that the R time-frequency resource units in each of the O time-frequency resource areas are used for signal transmission, to indicate or configure a second-level frame structure of the time-frequency resource unit used for signal transmission in the time-frequency resource area. A second sparseness degree $\rho_2$ of the time-frequency resource units in the O time-frequency resource areas is equal to a ratio of R to P*Q. The overall sparseness degree (that is, the overall sparseness degree of the frame

structure) $\rho$ of the time-frequency resource units in the subframe is equal to a ratio of O*R to PM*QN, in other words, $\rho$ is equal to $\rho_1 \times \rho_2$ .

S602: The network device sends the first frame information and the second frame information, and correspondingly, the first terminal device receives the first frame information and the second frame information.

S603: The first terminal device sends a signal, and correspondingly, the network device receives the signal.

In this embodiment of this application, the network device may determine, based on the overall sparseness degree $\rho$ of the time-frequency resource units that are in the subframe and that are required for communicating with the first terminal device, the first sparseness degree $\rho_1$ of the time-frequency resource areas in the resource block in the subframe, the second sparseness degree $\rho_2$ of the time-frequency resource units in the O time-frequency resource areas, and values of M and N, and may determine values of P and Q based on the values of M and N. A value of PM is equal to a quantity of subcarriers included in the resource block. A value of QN is equal to a quantity of symbols included in the resource block. When the resource block is one PRB, the value of PM is 12, and the value of QN is 14. In other words, the value of P is 12/M, and the value of Q is 14/N.

The network device may send, based on a value of $\rho_1$, the values of M and N, a value of $\rho_2$, and the values of P and Q, the first frame information to the first terminal device to indicate to divide the resource block in the subframe into the M*N time-frequency resource areas, and indicate that the O time-frequency resource areas in the M*N time-frequency resource areas are used for signal transmission, to indicate or configure the first-level frame structure of the time-frequency resource area used for signal transmission in the resource block in the subframe. The network device may send, based on the values of $\rho_1$, M, and N and the values of $\rho_2$, P, and Q, the second frame information to the first terminal device to indicate that the R time-frequency resource units in each of the O time-frequency resource areas are used for signal transmission, to indicate or configure the second-level frame structure of the time-frequency resource unit used for signal transmission in the time-frequency resource area.

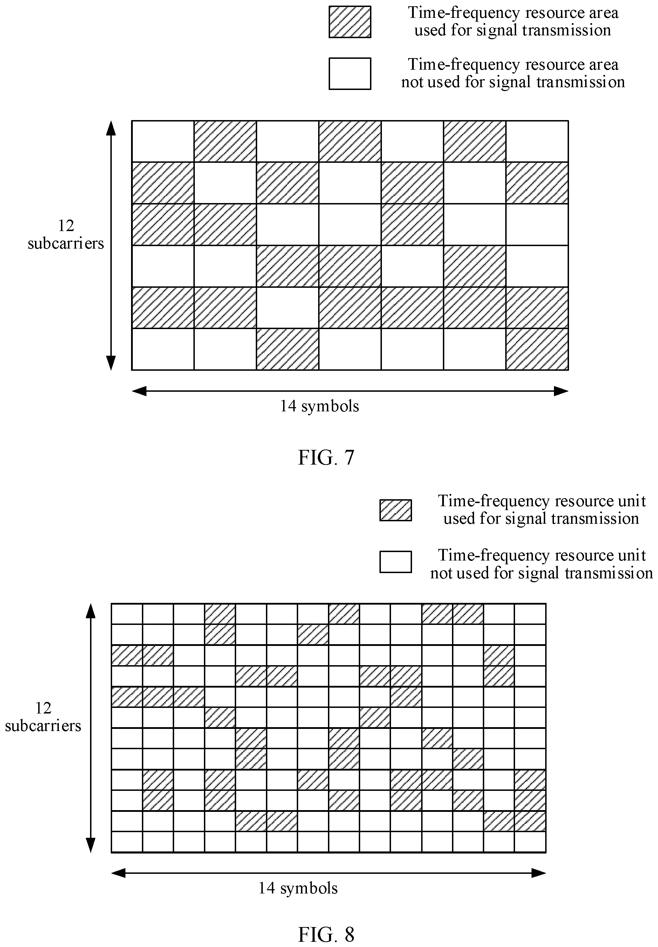

In an example, the network device determines that a value of $\rho$ is 1/4, the values of $\rho_1$, M, and N are 1/2, 6, and 7 respectively, and the values of $\rho_2$, P, and Q are 1/2, 2, and 2 respectively. The network device may send the first frame information to the first terminal device, where the first frame information may include the values of M and N, or the values of P and Q. If the first frame information includes the values of P and Q, the first terminal device may determine the values of M and N based on the fact that the value of M is 12/P and the value of N is 14/Q. FIG. 7 is a diagram of the first-level frame structure. When the values of M and N are 6 and 7 respectively, the first terminal device may equally divide the resource block in the subframe into six (that is, M) time-frequency resource areas in frequency domain and seven (that is, N) time-frequency resource areas in time domain, to obtain 42 (that is, M*N) time-frequency resource areas. In addition, the first frame information may further include the value of $\rho_1$ or O. The value of O is equal to a product of M*N and $\rho_1$. For example, when the values of $\rho_1$, M, and N are 1/2, 6, and 7 respectively, the value of O is 21. The first terminal device may further determine, based on the value 1/2 of $\rho_1$ or the value 21 of O, 21 (that is, O) time-frequency resource areas used for signal transmission in the 42 time-frequency resource areas in the resource block.

It should be understood that the O time-frequency resource areas may be randomly distributed in the M*N time-frequency resource areas, or may be distributed according to a specific rule. In some implementations, to avoid a case in which the time-frequency resource area used for signal transmission is centralized on one or more symbols, a large instantaneous peak power is generated when the first terminal device sends the signal on some symbols, and a high peak to average power ratio (peak to average power ratio, PAPR) is caused, in this embodiment of this application, quantities of time-frequency resource areas used for signal transmission in symbols may be equal. In other words, the O time-frequency resource areas are evenly distributed in the M*N time-frequency resource areas based on time domain locations. Alternatively, a difference between quantities of time-frequency resource areas used for signal transmission in symbols is less than a specified threshold.

In some implementations, the first frame information may alternatively include a binary matrix, or a sequence number (or a number, an index number, or the like) of the binary matrix, to indicate to divide the resource block in the subframe into the M*N time-frequency resource areas, indicate that the O time-frequency resource areas in the M*N time-frequency resource areas are used for signal transmission, and indicate the locations of the O time-frequency resources in the M*N time-frequency resource areas.

In an example, if the network device determines that the values of $\rho_1$, M, and N are 1/2, 6, and 7 respectively, the binary matrix sent by the network device to the first terminal device by using the first frame information may be the following binary matrix $B_{6 \times 7}$. where a quantity of rows of the binary matrix is the value of M, a quantity of columns of the binary matrix is the value of N, an element "1" in the binary matrix indicates that a corresponding time-frequency resource area is used for signal transmission (for example, used for pilot signal or data signal transmission), and an element "0" indicates that no transmission is performed in a corresponding time-frequency resource area, in other words, the time-frequency resource area is not used for signal transmission. For the M*N time-frequency resource areas in the resource block, N column numbers (1 to N) may be assigned in ascending order of time domain (for example, symbol) indexes, and M row numbers (1 to M) may be assigned in ascending order of frequency domain (for example, subcarrier) indexes. An element in the first column and the first row in the binary matrix corresponds to a time-frequency resource area in the first column and the first row in the M*N time-frequency resource areas. Similarly, an element in the first column and the second row corresponds to a time-frequency resource area in the first column and the second row in the M*N time-frequency resource areas.

$$
B_{6\times7} = \begin{bmatrix} 0 & 1 & 0 & 1 & 0 & 1 & 0 \\ 1 & 0 & 1 & 0 & 1 & 0 & 1 \\ 1 & 1 & 0 & 0 & 1 & 0 & 0 \\ 0 & 0 & 1 & 1 & 0 & 1 & 0 \\ 1 & 1 & 0 & 1 & 1 & 1 & 1 \\ 0 & 0 & 1 & 0 & 0 & 0 & 1 \end{bmatrix}.
$$

To avoid a case in which the time-frequency resource area used for signal transmission is centralized on one or more symbols, a large instantaneous peak power is generated when the first terminal device sends the signal on some symbols, and a high PAPR is caused, column weights of columns in the binary matrix, that is, quantities of elements "1", may be equal, and the O time-frequency resource areas are evenly distributed in the M*N time-frequency resource areas based on time domain locations.

In another example, a binary matrix corresponding to each group of values of $\rho_1$, M, and N and a sequence number of each binary matrix may be preconfigured in the network device and the first terminal device by using a protocol. For example, the binary matrix corresponding to each group of values of $\rho_1$, M, and N, and the sequence number of each binary matrix may be generated in advance, and stored in a 3rd generation partnership project (3rd generation partnership project, 3GPP) protocol table stored in the network device and the first terminal device. The network device may further send the first frame information including the sequence number of the binary matrix to the first terminal device, to indicate to divide the resource block in the subframe into the M*N time-frequency resource areas, indicate that the O time-frequency resource areas in the M*N time-frequency resource areas are used for signal transmission, and indicate the locations of the O time-frequency resources in the M*N time-frequency resource areas. For example, when the values of $\rho_1$, M, and N are 1/2, 6, and 7 respectively, the first frame information may include a sequence number of the binary matrix $B_{6\times7}$.

The network device may send, based on the values of $\rho_2$, P, and Q, the second frame information to the first terminal device to indicate that the R time-frequency resource units in each of the O time-frequency resource areas are used for signal transmission. In an example, the network device determines that the values of $\rho_2$, P, and Q are 1/2, 2, and 2 respectively. The value of R is equal to a product of P*Q and $\rho_2$, and the value of R is 2. In this case, the second frame information sent by the network device to the first terminal device may include the value of $\rho_2$ or R. The first terminal device may determine the values of P and Q based on the values of M and N. Details are not described again. The value of R is 2, and the first terminal device may determine that two (that is, R) time-frequency resources in each of the O time-frequency resource areas are used for signal transmission.

It should be understood that the first terminal device may randomly select the R time-frequency resources used for signal transmission in each of the O time-frequency resource areas, or may select the R time-frequency resources according to a specific rule. This is not limited in this application. FIG. 8 is a diagram of the second-level frame structure. FIG. 8 shows an example of a result of selecting, by the first terminal device based on FIG. 7, two time-frequency resource units used for signal transmission from each of the 21 time-frequency resource areas.

In some implementations, the network device may further send third indication information to the first terminal device, to indicate a first resource mapping pattern of each of the O time-frequency resource areas, in other words, to indicate locations of the R time-frequency resource units used for signal transmission in each of the O time-frequency resource areas.

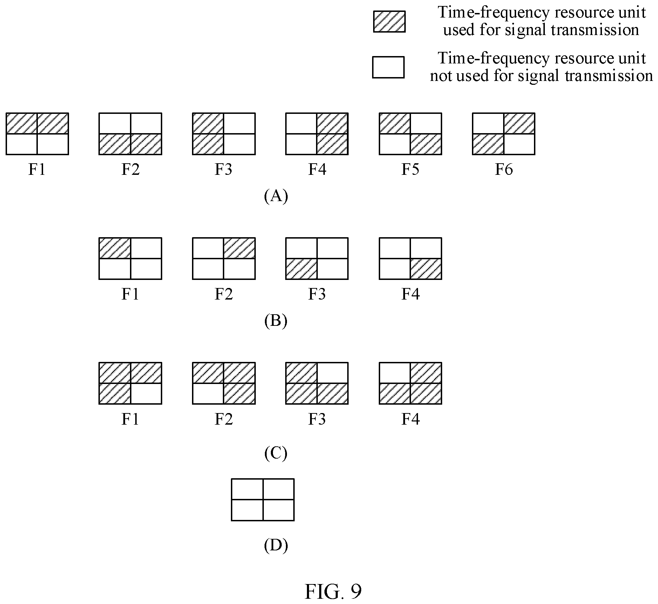

In this embodiment of this application, each group of values of R, P, and Q corresponds to one resource mapping pattern set, and the resource mapping pattern set includes $C_{PQ}^{R}$ different resource mapping patterns. As shown in A in FIG. 9, when the values of R, P, and Q are 2, 2, and 2 respectively, a resource mapping pattern set of six possible resource mapping patterns (F1 to F6) is provided. As shown in B in FIG. 9, when the values of the parameters R, P, and Q are 1, 2, and 2 respectively, a resource mapping pattern set of four possible resource mapping patterns (F1 to F4) is provided. As shown in C in FIG. 9, when the values of the parameters R, P, and Q are 3, 2, and 2 respectively, a resource mapping pattern set of four possible resource mapping patterns (F1 to F4) is provided.

Specifically, the third frame information may include a resource mapping pattern indication sequence, or a sequence number (or a number or an index number) of the resource mapping pattern indication sequence, to indicate the first resource mapping pattern of each of the O time-frequency resource areas.

In an example, if the values of O, P, Q, and R are 21, 2, 2, and 2 respectively, the resource mapping pattern indication sequence included in the third frame information sent by the network device to the first terminal device may be F1, F1, F4, F4, F5, F4, F2, F3, F1, F6, F4, F5, F2, F6, F4, F1, F5, F5, F3, F4, F1, and the resource mapping pattern indication sequence may indicate the first resource mapping patterns of all of the O time-frequency resource areas in ascending order of frequency domain indexes (for example, subcarrier indexes) and then in ascending order of time domain indexes (for example, symbol indexes). Alternatively, the first resource mapping patterns of all of the O time-frequency resource areas may be indicated in ascending order of time domain indexes and then in ascending order of frequency domain indexes. In this embodiment of this application, an example in which the resource mapping pattern indication sequence indicates the first resource mapping patterns of all of the O time-frequency resource areas in ascending order of the frequency domain indexes and then in ascending order of the time domain indexes is used for description. Refer to the resource mapping pattern set that includes the resource mapping patterns F1 to F6 and that corresponds to the values 2, 2, and 2 of P, Q, and R shown in A in FIG. 9. A first resource mapping pattern of the first terminal device in each of the 21 time-frequency resource areas is shown in FIG. 8 based on FIG. 7.

In some implementations, the resource mapping pattern indication sequence may alternatively be matrixized, and exists in a form of a resource mapping pattern indication matrix. In an example, the resource mapping pattern indication sequence F1, F1, F4, F4, F5, F4, F2, F3, F1, F6, F4, F5, F2, F6, F4, F1, F5, F5, F3, F4, F1 may be matrixized, and exist in a form of a resource mapping pattern indication matrix $F_{6 \times 7}$ shown in the following. A quantity of rows of the resource mapping pattern indication matrix is the value of M. A quantity of columns of the resource mapping pattern indication matrix is the value of N. The elements F1 to F6 in the resource mapping pattern indication matrix respectively indicate first resource mapping patterns used by corresponding time-frequency resource areas. An element "0" indicates that no transmission is performed in a corresponding time-frequency resource area. As shown in D in FIG. 9, when the values of P and Q are both 2, a resource mapping pattern in which no transmission is performed in the time-frequency resource area is provided. In the resource mapping pattern, no time-frequency resource unit in the time-frequency resource area is used for signal transmission. For the M*N time-frequency resource areas, N column numbers (1 to N) may be assigned in ascending order of frequency domain indexes, and M row numbers (1 to M) may be assigned in ascending order of time domain indexes. An element in the first column and the first row in the resource mapping pattern indication matrix corresponds to a time-frequency resource area in the first column and the first row in the M*N time-frequency resource areas. Similarly, an element in the first column and the second row corresponds to a time-frequency resource area in the first column and the second row in the M*N time-frequency resource areas.

$$
F_{6 \times 7} = \begin{bmatrix} 0 & F4 & 0 & F6 & 0 & F1 & 0 \\ F1 & 0 & F2 & 0 & F2 & 0 & F3 \\ F1 & F5 & 0 & 0 & F6 & 0 & 0 \\ 0 & 0 & F3 & F4 & 0 & F5 & 0 \\ F4 & F4 & 0 & F5 & F4 & F5 & F4 \\ 0 & 0 & F1 & 0 & 0 & 0 & F1 \end{bmatrix}.
$$

In another example, one or more resource mapping pattern indication sequences corresponding to each group of values of $\rho_1$, M, N, $\rho_2$, P, and Q and a sequence number of each resource mapping pattern indication sequence may be preconfigured in the network device and the first terminal device by using a protocol. For example, the resource mapping pattern indication sequence corresponding to each group of values of $\rho_1$, M, N, $\rho_2$, P, and Q and the sequence number of each resource mapping pattern indication sequence may be generated in advance, and stored in the 3GPP protocol table stored in the network device and the first terminal device. The network device may further send the third indication information including the sequence number of the resource mapping pattern indication sequence to the first terminal device, to indicate the first resource mapping pattern of each of the O time-frequency resource areas.

One or more resource mapping pattern indication sequences corresponding to each group of values of $\rho_1$, M, N, $\rho_2$, P, and Q and a sequence number of each resource mapping pattern indication sequence may not be preconfigured in the first terminal device. The first terminal device generates the one or more corresponding resource mapping pattern indication sequences and the sequence number of each resource mapping pattern indication sequence based on the values of $\rho_1$, M, N, $\rho_2$, P, and Q. A specific generation rule may be sent by the network device to the first terminal device in a broadcast, multicast, or unicast manner, or another manner, or may be predefined and stored in the first terminal device.

For the resource mapping pattern set corresponding to the values of $\rho_2$, P, and Q, after determining the corresponding resource mapping pattern set based on the values of $\rho_2$, P, and Q, the network device may send the resource mapping pattern set to the first terminal device in a broadcast, multicast, or unicast manner, or another manner. Alternatively, the network device may send the values of $\rho_2$, P, and Q to the first terminal device in a broadcast, multicast, or unicast manner, or another manner. The first terminal device determines the corresponding resource mapping pattern set based on the values of $\rho_2$, P, and Q. Alternatively, a resource mapping pattern set corresponding to each group of values of parameters $\rho_2$, P, and Q may be predefined and stored in the network device and the first terminal device, for example, predefined and stored in the 3GPP protocol table stored in the network device and the first terminal device. The first terminal device searches for the corresponding resource mapping pattern set based on the values of $\rho_2$, P, and Q.

After determining the time-frequency resource unit used for signal transmission in the resource block in the subframe, the first terminal device may send the signal, for example, a pilot signal and/or a data signal, to the network device. The network device receives the signal sent by the first terminal device. In some implementations, if the network device does not indicate a specific location of the time-frequency resource unit used by the first terminal device for signal transmission, the network device may perform blind detection on the resource block in the subframe, to receive the signal from the first terminal device. If the network device has indicated a specific location of the time-frequency resource unit used by the first terminal device for signal transmission, for example, the network device has indicated the O time-frequency resource areas used for signal transmission in the M*N time-frequency resource areas, and the first resource mapping pattern of each of the O time-frequency resource areas, the network device may receive the signal from the first terminal device on the corresponding time-frequency resource unit.

In addition, to increase a quantity of accessing terminal devices and reduce interference between the terminal devices, in some implementations, the network device may further divide the terminal devices into a plurality of terminal device groups. A plurality of terminal devices in a same terminal device group send a signal in same O time-frequency resource areas in the M*N time-frequency resource areas in the resource block, and resource mapping patterns used by the plurality of terminal devices in the same terminal device group in the O time-frequency resource areas are orthogonal to each other.

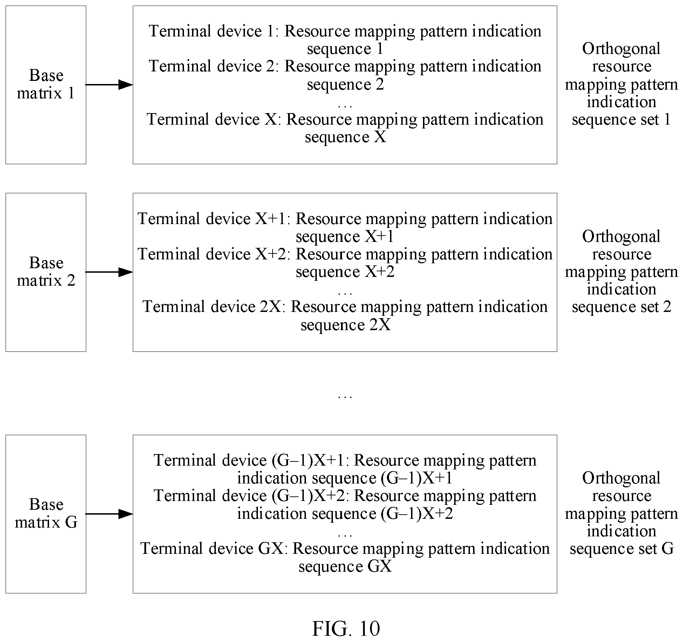

For example, the first frame information includes a base matrix. The base matrix indicates to divide the resource block in the subframe into the M*N time-frequency resource areas, and indicates locations of the O time-frequency resource areas used for signal transmission in the M*N time-frequency resource areas. The third frame information includes the resource mapping pattern indication sequence. The resource mapping pattern indication sequence indicates the first resource mapping pattern of each of the O time-frequency resource areas. As shown in FIG. 10, the network device may configure a same base matrix for terminal devices in a same terminal device group, configure different base matrices for terminal devices in different terminal device groups, and configure resource mapping pattern indication sequences that are orthogonal to each other for different terminal devices in the same terminal device group.

In an example, for the first terminal device and a second terminal device in a first terminal device group, the network device may send the first frame information including the foregoing base matrix $\boldsymbol{B}_{6\times 7}$ to the first terminal device and the second terminal device in a multicast manner, and may send the third frame information including the resource mapping pattern indication sequence F1, F1, F4, F4, F5, F4, F2, F3, F1, F6, F4, F5, F2, F6, F4, F1, F5, F5, F3, F4, F1 to the first terminal device in a unicast manner, and send another piece of third frame information including a resource mapping pattern indication sequence F2, F2, F3, F5, F4, F3, F1, F5, F2, F4, F5, F4, F3, F5, F5, F2, F1, F1, F2, F3, F2 to the second terminal device. The resource mapping pattern used by the first terminal device in the O time-frequency resource areas and a resource mapping pattern used by the second terminal device in the O time-frequency resource areas are different and orthogonal to each other.

It should be understood that, for a plurality of terminal device groups, the network device may configure a same value of R for terminal devices in a same terminal device group by using the second frame information, and may configure a same value of R or different values of R for terminal devices in different terminal device groups. In other words, quantities of time-frequency resource units used for signal transmission in all of the O time-frequency resource areas of the terminal devices in the same terminal device group may be equal. Quantities of time-frequency resource units used for signal transmission in all of the O time-frequency resource areas of the terminal devices in the different terminal device groups may be equal or may not be equal.

In this embodiment of this application, the first frame information and the second frame information may be sent in a multicast or unicast manner, or another manner. For example, the network device may send the first frame information and/or the second frame information to terminal devices in one terminal device group in a multicast manner, or may send the first frame information and/or the second frame information to different terminal devices in the terminal device group in a unicast manner. The third frame information may be sent in a unicast manner. For example, the network device may separately send specific third frame information to the different terminal devices in the terminal device group in a unicast manner. It should be understood that the first frame information and the second frame information may be sent by using a same message, or may be sent by using different messages. This is not limited in this embodiment of this application.

In addition, to improve a channel estimation effect, in this embodiment of this application, the network device and the first terminal device may further determine, based on a ratio of a time-frequency resource occupied by the data signal to a time-frequency resource occupied by the pilot signal, whether each of the M*N time-frequency resource areas is used to transmit the pilot signal or used to transmit the data signal.

Specifically, the network device or the first terminal device may determine, based on the ratio of the time-frequency resource occupied by the data signal to the time-frequency resource occupied by the pilot signal, a first sequence indicating that each of the M*N time-frequency resource areas is used to transmit the pilot signal or the data signal, to determine whether each of the M*N time-frequency resource areas is used to transmit the pilot signal or the data signal. The first sequence may include two types of elements: an element d and an element p, where the element p indicates that the time-frequency resource area is used to transmit the pilot signal, and the element d indicates that the time-frequency resource area is used to transmit the data signal. A length of the first sequence is equal to M*N. The elements in the first sequence may correspond to the M*N time-frequency resource areas in ascending order of frequency domain indexes and then in ascending order of time domain indexes of the M*N time-frequency resource areas, or may correspond to the M*N time-frequency resource areas in ascending order of time domain indexes and then in ascending order of frequency domain indexes of the M*N time-frequency resource areas. In this embodiment of this application, an example in which the elements in the first sequence correspond to the M*N time-frequency resource areas in ascending order of the frequency domain indexes and then in ascending order of the time domain indexes of the M*N time-frequency resource areas is used for description. Whether the element in the first sequence corresponding to the time-frequency resource area is d or p may indicate whether the time-frequency resource area is used to transmit the pilot signal or the data signal.

In an example, the network device or the first terminal device may set the element d and the element p in the first sequence at an interval based on the ratio of the time-frequency resource occupied by the data signal to the time-frequency resource occupied by the pilot signal, to determine the first sequence. For example, the ratio of the time-frequency resource occupied by the data signal to the time-frequency resource occupied by the pilot signal is 2:1. In this case, the network device may set the element d and the element p in the first sequence at an interval in an order of d, d, and p, until a quantity of elements in the first sequence is equal to the value of M*N, to obtain the first sequence. For example, when the value of M*N is 42, the first sequence may be d, d, p, d, d, p, d, d, p, d, d, p, d, d, p, d, d, p, d, d, p, d, d, p, d, d, p, d, d, p, d, d, p, d, d, p, d, d, p, d, d, p.

In another example, to further randomize distribution of the pilot signal and the data signal in the resource block and improve channel estimation performance, values of sequence mapping parameters m, n, and k may be further determined based on the ratio of the time-frequency resource occupied by the data signal to the time-frequency resource occupied by the pilot signal, where the values of m, n, and k are integers. In addition, layer-by-layer mapping is performed based on a first-layer base sequence and according to a rule of mapping each element d to m elements p and n elements d and mapping each element p to k elements d, until a quantity of elements in an obtained L$^{th}$-layer sequence is greater than or equal to M*N. M*N consecutive elements in the L$^{th}$-layer sequence are selected as the first sequence.

Table 1 shows an example: When the base sequence includes only elements d, m=1, n=2, and k=2, sequences of the first four layers are obtained by performing layer-by-layer mapping for three times based on the first-layer base sequence and according to the rule of mapping each element d to m elements p and n elements d and mapping each element p to k elements d. Layer-by-layer mapping may be performed based on the first-layer base sequence, until the quantity of elements in the obtained L$^{th}$-layer sequence is greater than or equal to M*N. The M*N consecutive elements in the L$^{th}$-layer sequence are selected as the first sequence. It should be understood that in this embodiment of this application, manners in which the network device and the first terminal device select the M*N consecutive elements from the L$^{th}$-layer sequence whose quantity of elements is greater than or equal to M*N are the same.

**Table 1**

| Layer | Sequence | Quantity of elements d | Quantity of elements p |
|---|---|---|---|
| 1 | d | 1 | 0 |
| 2 | p, d, d | 2 | 1 |
| 3 | d, d, p, d, d, p, d, d | 6 | 2 |
| 4 | p, d, d, p, d, d, d, d, p, d, d, p, d, d, d, d, p, d, d, p, d, d | 16 | 6 |
| ... | ... | ... | ... |

Layer-by-layer mapping is performed according to the rule of mapping each element d to m elements p and n elements d, and mapping each element p to k elements d, so that a ratio of the element d to the element p at an L$^{th}$ layer may be obtained as follows:

$$R_L = \frac{\alpha^{L+1}-\beta^{L+1}}{\alpha^L-\beta^L} = ratio.$$

$\alpha = \frac{1}{2}\left[\frac{n}{m} + \sqrt{\left(\frac{n}{m}\right)^2 + 4\frac{k}{m}}\right]$ , and $\beta = \frac{1}{2}\left[\frac{n}{m} - \sqrt{\left(\frac{n}{m}\right)^2 + 4\frac{k}{m}}\right]$ . When a quantity of layers $L \to \infty$ (in other words, mapping

$$R_\infty = \alpha = \frac{1}{2}\left[\frac{n}{m} + \sqrt{\left(\frac{n}{m}\right)^2 + 4\frac{k}{m}}\right] = ratio$$

is done for enough layers), , where the ratio indicates the ratio of the time-frequency resource occupied by the data signal to the time-frequency resource occupied by the pilot signal.

Therefore, a mapping relationship between the ratio and the parameters m, n, and k may be stored in a protocol in a form of a table. Table 2 is an example table including some mapping relationships between the ratio and the parameters m, n, and k provided in this embodiment of this application. An index (index) indicates an index number of the mapping relationship between the ratio and the parameters m, n, and k. The ratio indicates the ratio of the time-frequency resource occupied by the data signal to the time-frequency resource occupied by the pilot signal.

Table 2

| Index | Ratio | m | n | k |
|-------|-------|---|---|----|
| 1 | 2:1 | 1 | 1 | 2 |
| 2 | 3:1 | 1 | 1 | 6 |
| 3 | 4:1 | 1 | 1 | 12 |
| 4 | 5:1 | 1 | 1 | 20 |

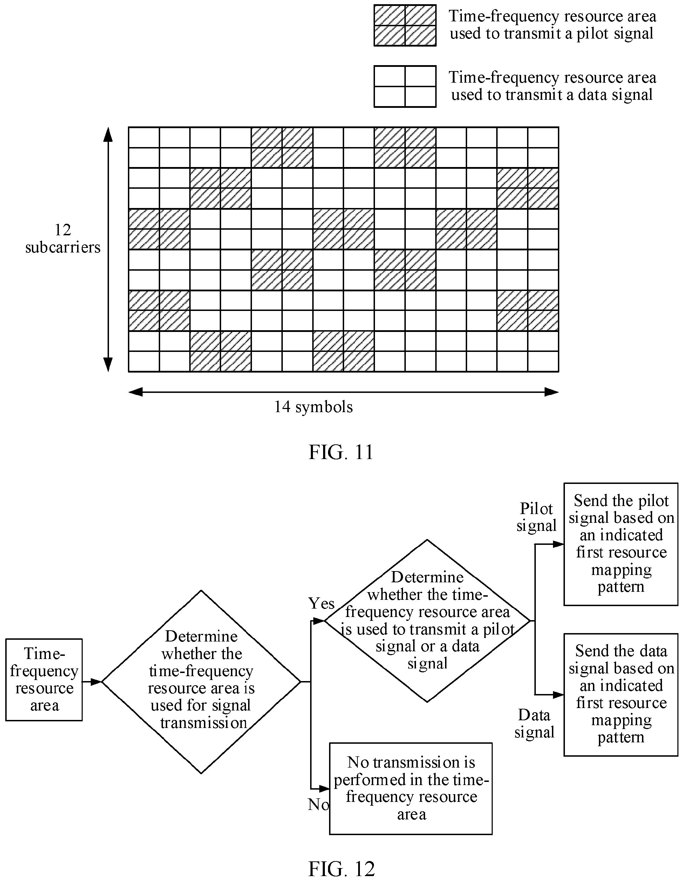

FIG. 11 is a diagram of a result of the first sequence indicating that each of the M*N time-frequency resource areas is used to transmit the pilot signal or the data signal when the ratio of the time-frequency resource occupied by the data signal to the time-frequency resource occupied by the pilot signal is 4:2, M=6, N=7, P=Q=2, and the first sequence is d, d, p, d, p, d, d, p, d, d, d, p, p, d, d, p, d, d, d, d, p, d, d, p, p, d, d, p, d, d, d, d, p, d, d, p, d, p, d, d, p, d.

The ratio of the time-frequency resource occupied by the data signal to the time-frequency resource occupied by the pilot signal may be indicated by the network device to the first terminal device by using a fourth frame message; or the first terminal device may report, to the network device, the ratio, supported by the first terminal device, of the time-frequency resource occupied by the data signal to the time-frequency resource occupied by the pilot signal, and both the network device and the first terminal device use the ratio, reported by the first terminal device, of the time-frequency resource occupied by the data signal to the time-frequency resource occupied by the pilot signal. Alternatively, when the network device does not indicate the ratio of the time-frequency resource occupied by the data signal to the time-frequency resource occupied by the pilot signal to the first terminal device, and the first terminal device does not report the ratio of the time-frequency resource occupied by the data signal to the time-frequency resource occupied by the pilot signal to the network device, both the network device and the first terminal device use a default ratio of a time-frequency resource occupied by the data signal to a time-frequency resource occupied by the pilot signal.

In some implementations, to ensure that all terminal devices in a same cell divide time-frequency resource areas occupied by a pilot signal and a data signal in a same manner, so that all the terminal devices in the cell send the pilot signal or the data signal in a same time-frequency resource area, to avoid mutual interference between the pilot signal and the data signal sent by different terminal devices in the same cell, and improve communication performance, the base sequence may be determined based on a cell identifier of the cell. In an example, the cell identifier of the cell is [1 0 1 10]. The base sequence may be set to d, p, d, d, p.

Certainly, the network device may directly indicate the first sequence to the first terminal device. Alternatively, first sequences corresponding to ratios of time-frequency resources occupied by different data signals of different lengths to time-frequency resources occupied by different pilot signals of different lengths may be preconfigured in the network device and the terminal device by using a protocol, or the like. For example, the first sequence may be generated in advance, and stored in the 3GPP protocol table stored in the network device and the first terminal device. The network device may further indicate a corresponding first sequence to the first terminal device by indicating an identifier of the first sequence to the first terminal device, to indicate that each of the M*N time-frequency resource areas is used to transmit the pilot signal or the data signal.

For example, the network device indicates, by using the first frame information, to divide the resource block in the subframe into the M*N time-frequency resource areas, and the O time-frequency resource areas used for signal transmission in the M*N time-frequency resource areas, and indicates, by using the second frame information, that the R time-frequency resource units in each of the O time-frequency resource areas are used for signal transmission. In this case, the network device indicates, by using the third frame information, the first resource mapping pattern of each of the O time-frequency resource areas. Refer to a diagram of a signal sending mechanism of a first terminal device shown in FIG. 12. For a time-frequency resource area, the first terminal device may determine, based on the first frame information, whether the time-frequency resource area is used for signal transmission. If the time-frequency resource area is used for signal transmission, the first terminal device may determine, based on the first sequence, whether the time-frequency resource area is used to transmit the pilot signal or the data signal. When the time-frequency resource area is used to transmit the pilot signal, the first terminal device sends the pilot signal based on a first resource mapping pattern that is of the time-frequency resource area and that is indicated by the third frame information. When the time-frequency resource area is used to transmit the data signal, the first terminal device sends the data signal based on a first resource mapping pattern that is of the time-frequency resource area and that is indicated by the third frame information. In addition, if the first frame information indicates that the time-frequency resource area is not used for signal transmission, no transmission is performed in the time-frequency resource area, and the first terminal device does not send any signal.

In addition, it should be understood that when the first sparseness degree $\rho_1$ of the time-frequency resource area in the resource block in the subframe is equal to 1, the overall sparseness degree $\rho$ of the time-frequency resource unit in the subframe is equal to the ratio of R to P*Q, in other words, $\rho$ is equal to $\rho_2$. The two-level frame structure may be changed to a single-level frame structure. When the second sparseness degree $\rho_2$ of the time-frequency resource units in the O time-frequency resource areas is equal to 1, $\rho$ is equal to the ratio of O to M*N, in other words, $\rho$ is equal to $\rho_1$. The first terminal device sends the data signal or the pilot signal on all P*Q time-frequency resource units in each of the O time-frequency resource areas. The two-level frame structure may also be changed to the single-level frame structure.

In addition, the first frame information, the second frame information, the third frame information, and the like that are sent by the network device to the first terminal device may indicate only one subframe, or may indicate subframes in a period of time. For example, first frame information A sent by the network device to the first terminal device may indicate only the first subframe after the first frame information A takes effect, or may indicate all subframes within a period of time from time when the first frame information A takes effect to time when first frame information B takes effect, where the first frame information B is a next piece of first frame information sent by the network device after the first frame information A.

In this embodiment of this application, a frame structure whose sparseness degree $\rho$ is equal to $\rho_1 \times \rho_2$ can be obtained by introducing a two-level frame structure design of the first-level frame structure of the time-frequency resource area used for signal transmission in the resource block in the subframe and the second-level frame structure of the time-frequency resource unit used for signal transmission in the time-frequency resource area. Therefore, the overall sparseness degree of the frame structure can be flexibly configured by adjusting the sparseness degree of the time-frequency resource areas used for signal transmission in the resource block in the subframe and the sparseness degree of the time-frequency units used for signal transmission in the time-frequency resource area. Compared with directly designing a sparseness degree of MP*NQ-dimensional time-frequency resource units, this design has the following advantages.

1. A pattern design is simple. In the direct design, a sparseness degree of an MP $\times$NQ-dimensional sparse pattern is equal to p. In this application, the resource block is divided into the M*N time-frequency resource areas whose sizes are P*Q. A frame structure whose sparseness degree is p can be flexibly constructed by designing the resource mapping pattern of each time-frequency resource area with reference to an indication of the third frame information on the resource mapping pattern.

2. A granularity of a resource on which no transmission is performed is flexibly configured. In addition to the resource mapping pattern of the time-frequency resource area, this embodiment of this application further provides a resource mapping pattern in which no transmission is performed. For a time-frequency resource area in which no transmission is performed, the first terminal device may not send any data signal or pilot signal on the P*Q time-frequency resource units. In this case, it can be ensured that on the time-frequency resource units whose size is P*Q, remaining terminal devices are not subject to multi-access interference from the first terminal device.

In addition, in this embodiment of this application, when a total quantity of accessing terminal devices in a communication system is K, a quantity of interfering terminal devices on the time-frequency resource unit may be calculated as $K_a=\rho K$. Therefore, multi-access interference of the communication system can be effectively controlled by flexibly configuring the sparseness degree $\rho=\rho_1 \times \rho_2$.

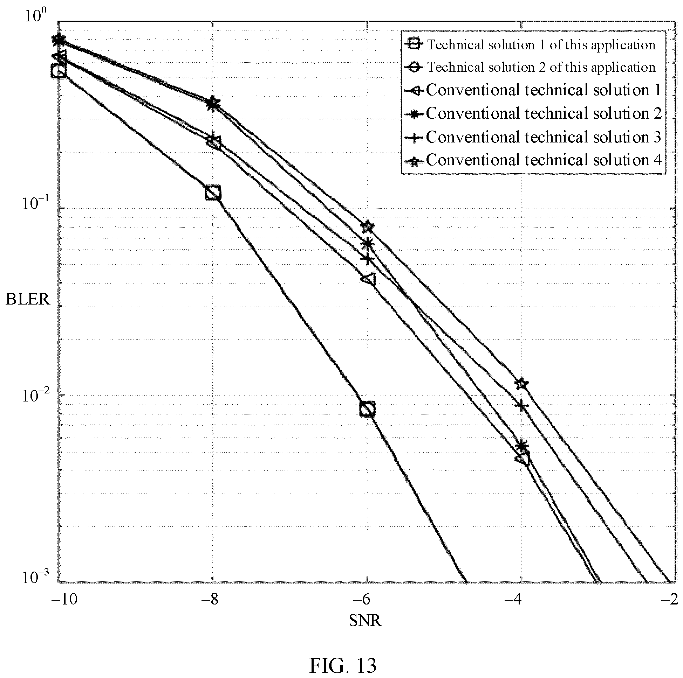

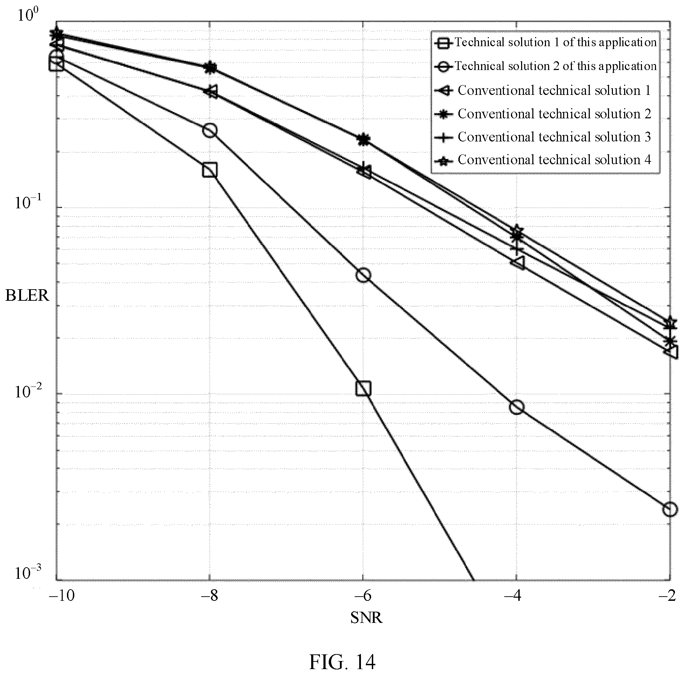

FIG. 13 and FIG. 14 each are a diagram of simulation performance of a block error rate (block error rate, BLER) of actual channel estimation according to a solution of this application. In each of FIG. 13 and FIG. 14, a horizontal axis indicates a signal-to-noise ratio (signal-to-noise ratio, SNR), and a vertical axis indicates the BLER. FIG. 13 corresponds to a low-speed moving scenario (scenario 1) in which a moving speed v=3 km/h. FIG. 14 corresponds to a high-speed moving scenario (scenario 2) in which v=250 km/h. Table 3 shows simulation parameter lists in the two scenarios.

**Table 3**

| Scenario | Quantity of potential terminal devices | Quantity of active terminal device users | Quantity of frequencies in frequency domain | Sparseness degree ρ | Moving speed | Antenna setting |
|---|---|---|---|---|---|---|
| Scenario 1 | 64 | 16 | 6 | 1/4 | 3 km/h | 1T4R |
| Scenario 2 | 64 | 16 | 6 | 1/4 | 250 km/h | 1T4R |

In FIG. 13 and FIG. 14, a curve corresponding to a technical solution 1 of this application is a BLER simulation curve of a case in which a transmitting end (for example, the terminal device) sends a signal by using the two-level frame structure solution provided in this application and a receiving end (for example, the network device) performs channel estimation based on a minimum mean square error (minimum mean square error, MMSE). A curve corresponding to a technical solution 2 of this application is a BLER simulation curve of a case in which a transmitting end sends a signal by using the two-level frame structure solution provided in this application and a receiving end performs channel estimation based on a time-frequency two-dimensional joint MMSE. A curve corresponding to a conventional technical solution 1 is a BLER simulation curve of a case in which a transmitting end sends a signal by using a front-loaded DMRS configuration and an interleave-division multiple access (interleave-division multiple access, IDMA) solution and a receiving end performs channel estimation. A curve corresponding to a conventional technical solution 2 is a BLER simulation curve of a case in which a transmitting end sends a signal by using an additional DMRS configuration and an IDMA solution and a receiving end performs channel estimation. A curve corresponding to a conventional technical solution 3 is a BLER simulation curve of a case in which a transmitting end sends a signal by using a front-loaded DMRS configuration and an SCMA solution and a receiving end performs channel estimation. A curve corresponding to a conventional technical solution 4 is a BLER simulation curve of a case in which a transmitting end sends a signal by using an additional DMRS configuration and an SCMA solution and a receiving end performs channel estimation.

The IDMA solution used in the conventional technical solution 1 and the conventional technical solution 2 may be an IDMA implementation solution in (L. Ping, L. Liu, K. Wu, and W. K. Leung, "Interleave-division multiple access," IEEE Trans. Wireless Commun., vol. 5, no. 4, pp. 938-947, Apr. 2006.). The SCMA solution used in the conventional technical solution 3 and the conventional technical solution 4 may be an implementation solution in (H. Nikopour and H. Baligh, "Sparse code multiple access," in Proc. IEEE 24th Annu. Int. Symp. Pers., Indoor, Mobile Radio Commun. (PIMRC), Sep. 2013, pp. 332-336.). Details are not described.

With reference to FIG. 13, it can be learned that, in the low-speed moving scenario, compared with the conventional technical solution 1 to the conventional technical solution 4, the technical solution 1 of this application and the technical solution 2 of this application can achieve an SNR performance gain of appropriately 1.5 dB on a basis of a bit error rate of $10^{-1}$.

With reference to FIG. 14, it can be learned that, in the high-speed moving scenario, compared with the conventional technical solution 1 to the conventional technical solution 4, the technical solution 1 of this application and the technical solution 2 of this application can achieve an SNR performance gain of appropriately 2 dB on the basis of the bit error rate of $10^{-1}$. In addition, compared with the technical solution 1 of this application, when the receiving end uses the technical solution 2 of this application, an SNR performance gain of appropriately 0.5 dB can be further achieved by using a feature that a channel rapidly changes in the high-speed moving scenario.

In addition, it should be noted that, in simulation in FIG. 13, a moving rate is set to 3 km/h. In this case, a channel changes slowly. Therefore, in the technical solutions of this application, there is no large difference between performance of channel estimation performed by the receiving end by using the MMSE and performance of channel estimation performed by using the time-frequency two-dimensional joint MMSE. In this case, in the simulation diagrams, the BLER simulation curves of the two times of channel estimation corresponding to the technical solution 1 of this application and the technical solution 2 of this application basically overlap.

It may be understood that, to implement the functions in the foregoing embodiments, the first terminal device and the network device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

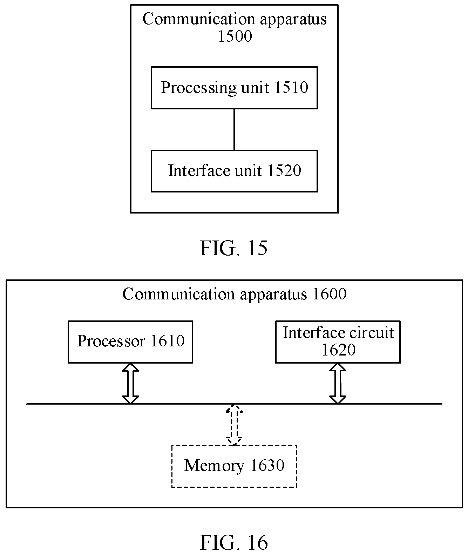

FIG. 15 and FIG. 16 are diagrams of possible structures of communication apparatuses according to embodiments of this application. These communication apparatuses may be configured to implement functions of the first terminal device or the network device in the foregoing method embodiments. Therefore, beneficial effects of the foregoing method embodiments can also be achieved. In a possible implementation, the communication apparatus may be any terminal device (that is, the first terminal device) shown in FIG. 1 or FIG. 2, or may be the network device shown in FIG. 1 or FIG. 2, or may be a module (such as a chip) used in the first terminal device or the network device.

As shown in FIG. 15, the communication apparatus 1500 includes a processing unit 1510 and an interface unit 1520, where the interface unit 1520 may alternatively be a transceiver unit or an input/output interface. The communication apparatus 1500 may be configured to implement the function of the first terminal device or the network device in the method embodiment shown in FIG. 6.

When the communication apparatus 1500 is configured to implement the function of the first terminal device in the method embodiment shown in FIG. 6,

the interface unit 1520 is configured to receive first frame information and second frame information from a network device, where the first frame information indicates to divide a resource block in a subframe into M*N time-frequency resource areas, and indicates that O time-frequency resource areas in the M*N time-frequency resource areas are used for signal transmission, and the second frame information indicates that R time-frequency resource units in each of the O time-frequency resource areas are used for signal transmission, where the resource block includes PM*QN time-frequency resource units, M, N, O, P, Q, and R are integers greater than or equal to 1, O is less than or equal to M*N, and R is less than or equal to PQ; the processing unit 1510 is configured to determine a signal; and the interface unit 1520 is further configured to send the signal.

In a possible design, the interface unit 1520 is further configured to: before sending the signal, receive third frame information from the network device, where the third frame information indicates a first resource mapping pattern of each of the O time-frequency resource areas, the first resource mapping pattern is a resource mapping pattern in a resource mapping pattern set, and the resource mapping pattern set corresponds to values of P, Q, and R.

In a possible design, the processing unit 1510 is further configured to: before the interface unit 1520 sends the signal, determine a first sequence based on a ratio of a time-frequency resource occupied by a data signal to a time-frequency resource occupied by a pilot signal, where the first sequence indicates that each of the M*N time-frequency resource areas is used to transmit the pilot signal or the data signal.

In a possible design, when determining the first sequence based on the ratio of the time-frequency resource occupied by the data signal to the time-frequency resource occupied by the pilot signal, the processing unit 1510 is specifically configured to: determine values of sequence mapping parameters m, n, and k based on the ratio of the time-frequency resource occupied by the data signal to the time-frequency resource occupied by the pilot signal, where the values of m, n, and k are integers; perform layer-by-layer mapping based on a first-layer base sequence and according to a rule of mapping each element d to m elements p and n elements d, and mapping each element p to k elements d, until a quantity of elements in an obtained $L^{th}$-layer sequence is greater than or equal to M*N, where the base sequence includes the element p and/or the element d, the element p indicates that the time-frequency resource area is used to transmit the pilot signal, the element d indicates that the time-frequency resource area is used to transmit the data signal, and L is an integer greater than or equal to 1; and select M*N consecutive elements in the $L^{th}$-layer sequence as the first sequence.

In a possible design, the interface unit 1520 is further configured to receive a fourth frame message from the network device, where the fourth frame message indicates the ratio of the time-frequency resource occupied by the data signal to the time-frequency resource occupied by the pilot signal.

In a possible design, the resource mapping pattern used by the communication apparatus in the O time-frequency resource areas and a resource mapping pattern used by a second terminal device in the O time-frequency resource areas are orthogonal to each other, the communication apparatus belongs to a first terminal device group, at least two terminal devices included in the first terminal device group send a signal in the O time-frequency resource areas, and the second terminal device is any terminal device other than the communication apparatus in the first terminal device group.

In a possible design, the base sequence is determined based on a cell identifier of the network device, in other words, is determined based on a cell identifier of a cell in which the communication apparatus is located.

In a possible design, the O time-frequency resource areas are evenly distributed in the M*N time-frequency resource areas based on time domain locations.

In a possible design, the first frame information includes a value of M or N, or values of P and Q.

When the communication apparatus 1500 is configured to implement the function of the network device in the method embodiment shown in FIG. 6,

the processing unit 1510 is configured to determine first frame information and second frame information, where the first frame information indicates to divide a resource block in a subframe into M*N time-frequency resource areas, and indicates that O time-frequency resource areas in the M*N time-frequency resource areas are used for signal transmission, and the second frame information indicates that R time-frequency resource units in each of the O time-frequency resource areas are used for signal transmission, where the resource block includes PM*QN time-frequency resource units, M, N, O, P, Q, and R are integers greater than or equal to 1, O is less than or equal to M*N, and R is less than or equal to P*Q; and the interface unit 1520 is configured to send the first frame information and the second frame information.

In a possible design, the interface unit 1520 is further configured to receive a signal from the first terminal device.

In a possible design, the interface unit 1520 is further configured to send third frame information to the first terminal device, where the third frame information indicates a first resource mapping pattern of each of the O time-frequency resource areas, the first resource mapping pattern is a resource mapping pattern in a resource mapping pattern set, and the resource mapping pattern set corresponds to values of P, Q, and R.

In a possible design, the processing unit 1510 is further configured to determine a first sequence based on a ratio of a time-frequency resource occupied by a data signal to a time-frequency resource occupied by a pilot signal, where the first sequence indicates that each of the M*N time-frequency resource areas is used to transmit the pilot signal or the data signal.

In a possible design, when determining the first sequence based on the ratio of the time-frequency resource occupied by the data signal to the time-frequency resource occupied by the pilot signal, the processing unit 1510 is specifically configured to: determine values of sequence mapping parameters $m$, $n$, and $k$ based on the ratio of the time-frequency resource occupied by the data signal to the time-frequency resource occupied by the pilot signal, where the values of $m$, $n$, and $k$ are integers; perform layer-by-layer mapping based on a first-layer base sequence and according to a rule of mapping each element $d$ to $m$ elements $p$ and $n$ elements $d$, and mapping each element $p$ to $k$ elements $d$, until a quantity of elements in an obtained $L^{th}$-layer sequence is greater than or equal to M*N, where the base sequence includes the element $p$ and/or the element $d$, the element $p$ indicates that the time-frequency resource area is used to transmit the pilot signal, the element $d$ indicates that the time-frequency resource area is used to transmit the data signal, and $L$ is an integer greater than or equal to 1; and select M*N consecutive elements in the $L^{th}$-layer sequence as the first sequence.

In a possible design, the interface unit 1520 is further configured to send fourth frame information, where the fourth frame message indicates the ratio of the time-frequency resource occupied by the data signal to the time-frequency resource occupied by the pilot signal.

In a possible design, the resource mapping pattern used by the first terminal device in the O time-frequency resource areas and a resource mapping pattern used by a second terminal device in the O time-frequency resource areas are orthogonal to each other, the first terminal device belongs to a first terminal device group, at least two terminal devices included in the first terminal device group send a signal in the O time-frequency resource areas, and the second terminal device is any terminal device other than the first terminal device in the first terminal device group.

In a possible design, the base sequence is determined based on a cell identifier of the network device. The cell identifier is an identifier of a cell in which the first terminal device is located.

In a possible design, the O time-frequency resource areas are evenly distributed in the M*N time-frequency resource areas based on time domain locations.

In a possible design, the first frame information includes a value of M or N, or values of P and Q.

As shown in FIG. 16, the communication apparatus 1600 includes a processor 1610 and an interface circuit 1620. The processor 1610 and the interface circuit 1620 are coupled to each other. It may be understood that the interface circuit 1620 may be a transceiver or an input/output interface. Optionally, the communication apparatus 1600 may further include a memory 1630, configured to: store instructions to be executed by the processor 1610, store input data required by the processor 1610 to run instructions, or store data generated after the processor 1610 runs instructions. Optionally, the memory 1630 may be integrated with the processor 1610.

When the communication apparatus 1600 is configured to implement the method shown in FIG. 6, the processor 1610 is configured to implement a function of the processing unit 1510, and the interface circuit 1620 is configured to implement a function of the interface unit 1520.

When the communication apparatus is the chip used in the first terminal device, the chip in the first terminal device implements the function of the first terminal device in the foregoing method embodiments. The chip in the first terminal device receives information from another module (for example, a radio frequency module or an antenna) in the first terminal device, where the information is sent by the network device or another terminal device to the first terminal device. Alternatively, the chip in the first terminal device sends information to another module (for example, a radio frequency module or an antenna) in the first terminal device, where the information is sent by the first terminal device to the network device or another terminal device.

When the communication apparatus is the module used in the network device, the module in the network device implements the function of the network device in the foregoing method embodiments. The module in the network device receives information from another module (for example, a radio frequency module or an antenna) in the network device, where the information is sent by the first terminal device or another terminal device to the network device. Alternatively, the module in the network device sends information to another module (for example, a radio frequency module or an antenna) in the network device, where the information is sent by the network device to the first terminal device or another terminal device. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium, and can write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist in the network device or the terminal device as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that the term "for example" in embodiments of this application is used to indicate giving an example, an illustration, or a description. Any embodiment or design scheme described as an "example" in this application should not be explained as being more preferred or having more advantages than another embodiment or design scheme. Exactly, the term "example" is used to present a concept in a specific manner.

In addition, in embodiments of this application, information (information), a signal (signal), a message (message), and a channel (channel) may be interchangeably used sometimes. It should be noted that meanings expressed by the terms are consistent when differences between the terms are not emphasized. "Of (of)", "corresponding, relevant (corresponding, relevant)", and "corresponding (corresponding)" may be interchangeably used sometimes. It should be noted that meanings expressed by the terms are consistent when differences between the terms are not emphasized.

It may be understood that various numbers in embodiments of this application are only used for differentiation for ease of description, and are not intended to limit the scope of embodiments of this application. Sequence numbers of the foregoing processes do not mean execution sequences. The execution sequences of the processes should be determined based on functions and internal logic of the processes.

**Claims**

1. A communication method, comprising:

   receiving, by a first terminal device, first frame information and second frame information from a network device, wherein the first frame information indicates to divide a resource block in a subframe into M*N time-frequency resource areas, and indicates that O time-frequency resource areas in the M*N time-frequency resource areas are used for signal transmission, and the second frame information indicates that R time-frequency resource units in each of the O time-frequency resource areas are used for signal transmission, wherein the resource block comprises PM*QN time-frequency resource units, M, N, O, P, Q, and R are integers greater than or equal to 1, O is less than or equal to M*N, and R is less than or equal to P*Q; and

sending, by the first terminal device, a signal.

2. The method according to claim 1, wherein before the sending, by the first terminal device, a signal, the method further comprises:

receiving, by the first terminal device, third frame information from the network device, wherein the third frame information indicates a first resource mapping pattern of each of the O time-frequency resource areas, the first resource mapping pattern is a resource mapping pattern in a resource mapping pattern set, and the resource mapping pattern set corresponds to values of P, Q, and R.

3. The method according to claim 1 or 2, wherein before the sending, by the first terminal device, a signal, the method further comprises:

determining, by the first terminal device, a first sequence based on a ratio of a time-frequency resource occupied by a data signal to a time-frequency resource occupied by a pilot signal, wherein the first sequence indicates that each of the M*N time-frequency resource areas is used to transmit the pilot signal or the data signal.

4. The method according to claim 3, wherein the determining, by the first terminal device, a first sequence based on a ratio of a time-frequency resource occupied by a data signal to a time-frequency resource occupied by a pilot signal comprises:

determining, by the first terminal device, values of sequence mapping parameters m, n, and k based on the ratio of the time-frequency resource occupied by the data signal to the time-frequency resource occupied by the pilot signal, wherein the values of m, n, and k are integers;

performing, by the first terminal device, layer-by-layer mapping based on a first-layer base sequence and according to a rule of mapping each element d to m elements p and n elements d, and mapping each element p to k elements d, until a quantity of elements in an obtained $L^{th}$-layer sequence is greater than or equal to M*N, wherein the base sequence comprises the element p and/or the element d, the element p indicates that the time-frequency resource area is used to transmit the pilot signal, the element d indicates that the time-frequency resource area is used to transmit the data signal, and L is an integer greater than or equal to 1; and

selecting, by the first terminal device, M*N consecutive elements in the $L^{th}$-layer sequence as the first sequence.

5. The method according to claim 3 or 4, wherein the method further comprises:

receiving, by the first terminal device, a fourth frame message from the network device, wherein the fourth frame message indicates the ratio of the time-frequency resource occupied by the data signal to the time-frequency resource occupied by the pilot signal.

6. The method according to claim 2, wherein the resource mapping pattern used by the first terminal device in the O time-frequency resource areas and a resource mapping pattern used by a second terminal device in the O time-frequency resource areas are orthogonal to each other, the first terminal device belongs to a first terminal device group, at least two terminal devices comprised in the first terminal device group send a signal in the O time-frequency resource areas, and the second terminal device is any terminal device other than the first terminal device in the first terminal device group.

7. The method according to claim 4, wherein the base sequence is determined based on a cell identifier of the network device.

8. The method according to any one of claims 1 to 7, wherein the O time-frequency resource areas are evenly distributed in the M*N time-frequency resource areas based on time domain locations.

9. The method according to any one of claims 1 to 8, wherein the first frame information comprises a value of M or N, or values of P and Q.

10. A communication method, comprising:

determining, by a network device, first frame information and second frame information, wherein the first frame information indicates to divide a resource block in a subframe into M*N time-frequency resource areas, and indicates that O time-frequency resource areas in the M*N time-frequency resource areas are used for signal transmission, and the second frame information indicates that R time-frequency resource units in each of the O time-frequency resource areas are used for signal transmission, wherein the resource block comprises PM*QN time-frequency resource units, M, N, O, P, Q, and R are integers greater than or equal to 1, O is less than or equal to M*N, and R is less than or equal to P*Q; and

sending, by the network device, the first frame information and the second frame information.

11. The method according to claim 10, wherein the method further comprises:
sending, by the network device, third frame information to a first terminal device, wherein the third frame information indicates a first resource mapping pattern of each of the O time-frequency resource areas, the first resource mapping pattern is a resource mapping pattern in a resource mapping pattern set, and the resource mapping pattern set corresponds to values of P, Q, and R.

12. The method according to claim 10 or 11, wherein the method further comprises:
determining, by the network device, a first sequence based on a ratio of a time-frequency resource occupied by a data signal to a time-frequency resource occupied by a pilot signal, wherein the first sequence indicates that each of the M*N time-frequency resource areas is used to transmit the pilot signal or the data signal.

13. The method according to claim 12, wherein the determining, by the network device, a first sequence based on a ratio of a time-frequency resource occupied by a data signal to a time-frequency resource occupied by a pilot signal comprises:

determining, by the network device, values of sequence mapping parameters m, n, and k based on the ratio of the time-frequency resource occupied by the data signal to the time-frequency resource occupied by the pilot signal, wherein the values of m, n, and k are integers;
performing, by the network device, layer-by-layer mapping based on a first-layer base sequence and according to a rule of mapping each element d to m elements p and n elements d, and mapping each element p to k elements d, until a quantity of elements in an obtained $L^{th}$-layer sequence is greater than or equal to M*N, wherein the base sequence comprises the element p and/or the element d, the element p indicates that the time-frequency resource area is used to transmit the pilot signal, the element d indicates that the time-frequency resource area is used to transmit the data signal, and L is an integer greater than or equal to 1; and
selecting, by the network device, M*N consecutive elements in the $L^{th}$-layer sequence as the first sequence.

14. The method according to claim 12 or 13, wherein the method further comprises:
sending, by the network device, fourth frame information, wherein the fourth frame message indicates the ratio of the time-frequency resource occupied by the data signal to the time-frequency resource occupied by the pilot signal.

15. The method according to claim 11, wherein the resource mapping pattern used by the first terminal device in the O time-frequency resource areas and a resource mapping pattern used by a second terminal device in the O time-frequency resource areas are orthogonal to each other, the first terminal device belongs to a first terminal device group, at least two terminal devices comprised in the first terminal device group send a signal in the O time-frequency resource areas, and the second terminal device is any terminal device other than the first terminal device in the first terminal device group.

16. The method according to claim 13, wherein the base sequence is determined based on a cell identifier of the network device.

17. The method according to any one of claims 10 to 16, wherein the O time-frequency resource areas are evenly distributed in the M*N time-frequency resource areas based on time domain locations.

18. The method according to any one of claims 10 to 17, wherein the first frame information comprises a value of M or N, or values of P and Q.

19. A communication apparatus, comprising an interface unit and a processing unit, wherein

the interface unit is configured to receive first frame information and second frame information from a network device, wherein the first frame information indicates to divide a resource block in a subframe into M*N time-frequency resource areas, and indicates that O time-frequency resource areas in the M*N time-frequency resource areas are used for signal transmission, and the second frame information indicates that R time-frequency resource units in each of the O time-frequency resource areas are used for signal transmission, wherein the resource block comprises PM*QN time-frequency resource units, M, N, O, P, Q, and R are integers greater than or equal to 1, O is less than or equal to M*N, and R is less than or equal to P*Q;

the processing unit is configured to determine a signal; and

the interface unit is further configured to send the signal.

20. The apparatus according to claim 19, wherein the interface unit is further configured to: before sending the signal, receive third frame information from the network device, wherein the third frame information indicates a first resource mapping pattern of each of the O time-frequency resource areas, the first resource mapping pattern is a resource mapping pattern in a resource mapping pattern set, and the resource mapping pattern set corresponds to values of P, Q, and R.

21. The apparatus according to claim 19 or 20, wherein the processing unit is further configured to: before the interface unit sends the signal, determine a first sequence based on a ratio of a time-frequency resource occupied by a data signal to a time-frequency resource occupied by a pilot signal, wherein the first sequence indicates that each of the M*N time-frequency resource areas is used to transmit the pilot signal or the data signal.

22. The apparatus according to claim 21, wherein when determining the first sequence based on the ratio of the time-frequency resource occupied by the data signal to the time-frequency resource occupied by the pilot signal, the processing unit is specifically configured to: determine values of sequence mapping parameters m, n, and k based on the ratio of the time-frequency resource occupied by the data signal to the time-frequency resource occupied by the pilot signal, wherein the values of m, n, and k are integers;

perform layer-by-layer mapping based on a first-layer base sequence and according to a rule of mapping each element d to m elements p and n elements d, and mapping each element p to k elements d, until a quantity of elements in an obtained $L^{th}$-layer sequence is greater than or equal to M*N, wherein the base sequence comprises the element p and/or the element d, the element p indicates that the time-frequency resource area is used to transmit the pilot signal, the element d indicates that the time-frequency resource area is used to transmit the data signal, and L is an integer greater than or equal to 1; and

select M*N consecutive elements in the $L^{th}$-layer sequence as the first sequence.

23. The apparatus according to claim 21 or 22, wherein the interface unit is further configured to receive a fourth frame message from the network device, wherein the fourth frame message indicates the ratio of the time-frequency resource occupied by the data signal to the time-frequency resource occupied by the pilot signal.

24. The apparatus according to claim 20, wherein the resource mapping pattern used by the communication apparatus in the O time-frequency resource areas and a resource mapping pattern used by a second terminal device in the O time-frequency resource areas are orthogonal to each other, the communication apparatus belongs to a first terminal device group, at least two terminal devices comprised in the first terminal device group send a signal in the O time-frequency resource areas, and the second terminal device is any terminal device other than the communication apparatus in the first terminal device group.

25. The apparatus according to claim 22, wherein the base sequence is determined based on a cell identifier of the network device.

26. The apparatus according to any one of claims 19 to 25, wherein the O time-frequency resource areas are evenly distributed in the M*N time-frequency resource areas based on time domain locations.

27. The apparatus according to any one of claims 19 to 26, wherein the first frame information comprises a value of M or N, or values of P and Q.

28. A communication apparatus, comprising an interface unit and a processing unit, wherein

the processing unit is configured to determine first frame information and second frame information, wherein the first frame information indicates to divide a resource block in a subframe into M*N time-frequency resource areas, and indicates that O time-frequency resource areas in the M*N time-frequency resource areas are used for signal transmission, and the second frame information indicates that R time-frequency resource units in each of the O time-frequency resource areas are used for signal transmission, wherein the resource block comprises PM*QN time-frequency resource units, M, N, O, P, Q, and R are integers greater than or equal to 1, O is less than or equal to M*N, and R is less than or equal to P*Q; and

the interface unit is configured to send the first frame information and the second frame information.

29. The apparatus according to claim 28, wherein the interface unit is further configured to send third frame information to a first terminal device, wherein the third frame information indicates a first resource mapping pattern of each of the O time-frequency resource areas, the first resource mapping pattern is a resource mapping pattern in a resource mapping pattern set, and the resource mapping pattern set corresponds to values of P, Q, and R.

30. The apparatus according to claim 28 or 29, wherein the processing unit is further configured to determine a first sequence based on a ratio of a time-frequency resource occupied by a data signal to a time-frequency resource occupied by a pilot signal, wherein the first sequence indicates that each of the M*N time-frequency resource areas is used to transmit the pilot signal or the data signal.

31. The apparatus according to claim 30, wherein when determining the first sequence based on the ratio of the time-frequency resource occupied by the data signal to the time-frequency resource occupied by the pilot signal, the processing unit is specifically configured to: determine values of sequence mapping parameters m, n, and k based on the ratio of the time-frequency resource occupied by the data signal to the time-frequency resource occupied by the pilot signal, wherein the values of m, n, and k are integers;

perform layer-by-layer mapping based on a first-layer base sequence and according to a rule of mapping each element d to m elements p and n elements d, and mapping each element p to k elements d, until a quantity of elements in an obtained $L^{th}$-layer sequence is greater than or equal to M*N, wherein the base sequence comprises the element p and/or the element d, the element p indicates that the time-frequency resource area is used to transmit the pilot signal, the element d indicates that the time-frequency resource area is used to transmit the data signal, and L is an integer greater than or equal to 1; and
select M*N consecutive elements in the $L^{th}$-layer sequence as the first sequence.

32. The apparatus according to claim 30 or 31, wherein the interface unit is further configured to send fourth frame information, wherein the fourth frame message indicates the ratio of the time-frequency resource occupied by the data signal to the time-frequency resource occupied by the pilot signal.

33. The apparatus according to claim 29, wherein the resource mapping pattern used by the first terminal device in the O time-frequency resource areas and a resource mapping pattern used by a second terminal device in the O time-frequency resource areas are orthogonal to each other, the first terminal device belongs to a first terminal device group, at least two terminal devices comprised in the first terminal device group send a signal in the O time-frequency resource areas, and the second terminal device is any terminal device other than the first terminal device in the first terminal device group.

34. The apparatus according to claim 31, wherein the base sequence is determined based on a cell identifier of a network device.

35. The apparatus according to any one of claims 28 to 34, wherein the O time-frequency resource areas are evenly distributed in the M*N time-frequency resource areas based on time domain locations.

36. The apparatus according to any one of claims 28 to 35, wherein the first frame information comprises a value of M or N, or values of P and Q.

37. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 18 by using a logic circuit or by executing code instructions.

38. A computer program product, comprising program code, wherein when the program code is executed, the method according to any one of claims 1 to 18 is implemented.

**39.** A chip, wherein the chip is configured to implement the method according to any one of claims 1 to 18.

**40.** A computer-readable storage medium, wherein the storage medium stores a computer program or instructions, and when the computer program or the instructions are executed, the method according to any one of claims 1 to 18 is implemented.

**41.** A communication system, wherein the system comprises a first terminal device and a network device, wherein the first terminal device is configured to implement the method according to any one of claims 1 to 9, and the network device is configured to implement the method according to any one of claims 10 to 18.

FIG. 1

FIG. 2

EP 4 447 586 A1

Radio frame: 10 ms

Half-frame: 5 ms

Subframe: 1 ms

| Subframe 0 | Subframe 1 | Subframe 2 | Subframe 3 | Subframe 4 | Subframe 5 | Subframe 6 | Subframe 7 | Subframe 8 | Subframe 9 |

Slot

Subcarrier spacing 15 kHz

| 0 | 1 | 2 | 3 | 4 | 5 | 6 | 7 | 8 | 9 | 10 | 11 | 12 | 13 |

Slot | Slot

Subcarrier spacing 30 kHz

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

FIG. 3

Codebook 1
(sparse codewords
A1 to A4)

Codebook 2
(sparse codewords
B1 to B4)

Codebook 3
(sparse codewords
C1 to C4)

Codebook 4
(sparse codewords
D1 to D4)

Codebook 5
(sparse codewords
E1 to E4)

Codebook 6
(sparse codewords
F1 to F4)

Subcarrier 0
Subcarrier 1
Subcarrier 2
Subcarrier 3

A1 A2 A3 A4    B1 B2 B3 B4    C1 C2 C3 C4    D1 D2 D3 D4    E1 E2 E3 E4    F1 F2 F3 F4

A1    B3    C2    D4    E4    F1

+    +    +    +    +

Six sparse codewords are
superimposed on four
orthogonal resources
(subcarriers)

User 1  User 2  User 3  User 4  User 5  User 6

FIG. 4

EP 4 447 586 A1

FIG. 5

FIG. 6

☒ Time-frequency resource area
used for signal transmission

☐ Time-frequency resource area
not used for signal transmission

12
subcarriers

14 symbols

FIG. 7

☒ Time-frequency resource unit
used for signal transmission

☐ Time-frequency resource unit
not used for signal transmission

12
subcarriers

14 symbols

FIG. 8

EP 4 447 586 A1

FIG. 9

32

| Base matrix 1 | → | Terminal device 1: Resource mapping pattern indication sequence 1 <br> Terminal device 2: Resource mapping pattern indication sequence 2 <br> ... <br> Terminal device X: Resource mapping pattern indication sequence X | Orthogonal resource mapping pattern indication sequence set 1 |

| Base matrix 2 | → | Terminal device X+1: Resource mapping pattern indication sequence X+1 <br> Terminal device X+2: Resource mapping pattern indication sequence X+2 <br> ... <br> Terminal device 2X: Resource mapping pattern indication sequence 2X | Orthogonal resource mapping pattern indication sequence set 2 |

...

| Base matrix G | → | Terminal device (G–1)X+1: Resource mapping pattern indication sequence (G–1)X+1 <br> Terminal device (G–1)X+2: Resource mapping pattern indication sequence (G–1)X+2 <br> ... <br> Terminal device GX: Resource mapping pattern indication sequence GX | Orthogonal resource mapping pattern indication sequence set G |

FIG. 10

FIG. 11

FIG. 12

FIG. 13

FIG. 14

Communication apparatus
1500

Processing unit 1510

Interface unit 1520

FIG. 15

Communication apparatus 1600

Processor 1610

Interface circuit
1620

Memory 1630

FIG. 16

## INTERNATIONAL SEARCH REPORT

International application No.

**PCT/CN2022/137559**

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

3GPP, CNTXT, DWPI, ENTXTC: 参考信号, 导频, 解调参考信号, 探测参考信号, 前导码, 峰值平均功率比, 图样, 稀疏编码, 稀疏度, 符号, 资源块, RS, reference signal, DMRS, SRS, preamble, PAPR, bitmap, SCMA, sparse, ofdm, RB

**C. DOCUMENTS CONSIDERED TO BE RELEVANT**

| Category* | Citation of document, with indication, where appropriate, of the relevant passages | Relevant to claim No. |
|---|---|---|
| A | CN 109478979 A (SAMSUNG ELECTRONICS CO., LTD.) 15 March 2019 (2019-03-15) description, paragraphs 66-82 | 1-41 |
| A | CN 102271109 A (ZTE CORP.) 07 December 2011 (2011-12-07) entire document | 1-41 |
| A | CN 104301067 A (HUAWEI TECHNOLOGIES CO., LTD.) 21 January 2015 (2015-01-21) entire document | 1-41 |
| A | CN 108134624 A (VIVO COMMUNICATION TECHNOLOGY CO., LTD.) 08 June 2018 (2018-06-08) entire document | 1-41 |
| A | CN 108282287 A (VIVO COMMUNICATION TECHNOLOGY CO., LTD.) 13 July 2018 (2018-07-13) entire document | 1-41 |
| A | CN 113271552 A (HUAWEI TECHNOLOGIES CO., LTD.) 17 August 2021 (2021-08-17) entire document | 1-41 |

☑ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **29 January 2023** | **17 February 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
| --- |
| **PCT/CN2022/137559** |

### C. DOCUMENTS CONSIDERED TO BE RELEVANT

| Category* | Citation of document, with indication, where appropriate, of the relevant passages | Relevant to claim No. |
| --- | --- | --- |
| A | US 2016315745 A1 (LG ELECTRONICS INC.) 27 October 2016 (2016-10-27)<br>    entire document | 1-41 |
| A | WO 2017144002 A1 (BAICELLS TECHNOLOGIES CO., LTD.) 31 August 2017<br>(2017-08-31)<br>    entire document | 1-41 |

Form PCT/ISA/210 (second sheet) (July 2022)

INTERNATIONAL SEARCH REPORT
Information on patent family members

International application No.

**PCT/CN2022/137559**

| Patent document cited in search report | | | Publication date (day/month/year) | Patent family member(s) | | | Publication date (day/month/year) |
|---|---|---|---|---|---|---|---|
| CN | 109478979 | A | 15 March 2019 | EP | 3474479 | A1 | 24 April 2019 |
| | | | | US | 2021045101 | A1 | 11 February 2021 |
| | | | | US | 2019342865 | A1 | 07 November 2019 |
| | | | | KR | 20180010949 | A | 31 January 2018 |
| | | | | EP | 3474479 | A4 | 11 September 2019 |
| | | | | WO | 2018016904 | A1 | 25 January 2018 |
| | | | | KR | 20180011022 | A | 31 January 2018 |
| | | | | IN | 201937001823 | A | 15 February 2019 |
| | | | | US | 10834718 | B2 | 10 November 2020 |
| | | | | KR | 102399616 | B1 | 17 May 2022 |
| | | | | KR | 20220066238 | A | 24 May 2022 |
| | | | | CN | 109478979 | B | 15 July 2022 |
| | | | | CN | 115134062 | A | 30 September 2022 |
| | | | | KR | 20180010964 | A | 31 January 2018 |
| CN | 102271109 | A | 07 December 2011 | WO | 2011153859 | A1 | 15 December 2011 |
| | | | | CN | 102271109 | B | 12 August 2015 |
| CN | 104301067 | A | 21 January 2015 | WO | 2015007152 | A1 | 22 January 2015 |
| | | | | CN | 104301067 | B | 21 September 2018 |
| CN | 108134624 | A | 08 June 2018 | CN | 108134624 | B | 30 June 2022 |
| CN | 108282287 | A | 13 July 2018 | CN | 108282287 | B | 05 May 2020 |
| CN | 113271552 | A | 17 August 2021 | WO | 2021164473 | A1 | 26 August 2021 |
| | | | | CN | 113271552 | B | 19 August 2022 |
| | | | | IN | 202247048893 | A | 02 September 2022 |
| US | 2016315745 | A1 | 27 October 2016 | EP | 3086482 | A1 | 26 October 2016 |
| | | | | WO | 2015093866 | A1 | 25 June 2015 |
| | | | | EP | 3086482 | A4 | 23 August 2017 |
| | | | | US | 10063357 | B2 | 28 August 2018 |
| | | | | EP | 3086482 | B1 | 07 August 2019 |
| | | | | JP | 2017508316 | A | 23 March 2017 |
| | | | | JP | 6263268 | B2 | 17 January 2018 |
| WO | 2017144002 | A1 | 31 August 2017 | US | 2019053223 | A1 | 14 February 2019 |
| | | | | JP | 2019507987 | A | 22 March 2019 |
| | | | | EP | 3422624 | A1 | 02 January 2019 |
| | | | | CN | 107135053 | A | 05 September 2017 |
| | | | | CN | 107135053 | B | 16 August 2019 |
| | | | | CN | 110247748 | A | 17 September 2019 |
| | | | | CN | 110247748 | B | 22 June 2021 |
| | | | | JP | 6875413 | B2 | 26 May 2021 |
| | | | | EP | 3422624 | A4 | 18 September 2019 |
| | | | | US | 10925040 | B2 | 16 February 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210004697

**Non-patent literature cited in the description**

- **L. PING ; L. LIU ; K. WU ; W. K. LEUNG.** Interleave-division multiple access. *IEEE Trans. Wireless Commun.,* April 2006, vol. 5 (4), 938-947

- **H. NIKOPOUR ; H. BALIGH.** Sparse code multiple access. *Proc. IEEE 24th Annu. Int. Symp. Pers., Indoor, Mobile Radio Commun. (PIMRC),* September 2013, 332-336